(19) Europäisches Patentamt
European Patent Office
Office européen des brevets

(11) EP 3 295 819 B1

(12) **EUROPEAN PATENT SPECIFICATION**

(45) Date of publication and mention of the grant of the patent:
**10.04.2019 Bulletin 2019/15**

(51) Int Cl.:
***A44C 15/00*** *(2006.01)* ***F21V 8/00*** *(2006.01)*
*A45D 8/00* *(2006.01)*

(21) Application number: **16188962.1**

(22) Date of filing: **15.09.2016**

(54) **COLORED HAIR ORNAMENT, METHOD AND KIT THEREOF**

GEFÄRBTER HAARSCHMUCK, VERFAHREN UND KIT DAFÜR

ACCESSOIRE POUR CHEVEUX COLORÉS, PROCÉDÉ ET KIT CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.03.2018 Bulletin 2018/12**

(73) Proprietor: **Noxell Corporation**
**Hunt Valley, MD 21030-2098 (US)**

(72) Inventors:
- **AMANN, Mathias**
  **61476 Kronberg/Taunus (DE)**
- **HERRLEIN, Mathias**
  **65824 Schwalbach am Taunus (DE)**
- **SCHAEFER, Tatjana**
  **65824 Schwalbach am Taunus (DE)**
- **DAEHNE, Lars**
  **12489 Berlin (DE)**

(74) Representative: **Bandpay & Greuter**
**30, rue Notre-Dame des Victoires**
**75002 Paris (FR)**

(56) References cited:
**EP-A1- 3 015 135**
**WO-A2-2006/092598**
**US-A1- 2003 156 429**
**US-A1- 2005 068 791**

EP 3 295 819 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to the field of colored hair ornament, which comprises a light source, a plurality of light-transmissive filaments, wherein one or more light-transmissive filaments of the plurality of light-transmissive filaments comprise a first coating with a first composition and a second coating with a second composition, wherein the first coating is underneath the second coating. It also relates to a method for customizing the colored hair ornament and a kit for treating hair.

BACKGROUND OF THE INVENTION

Decorative hair ornaments are well-known and include polished stones, feathers, thread, fabric, metal and plastic. Only recently have hair ornaments began incorporating electrical components, such as fiber optics, and light sources to improve the aesthetic appeal of such hair ornaments, see for instance US Patent US 3,675,005, or US 2003/156429 A1. Hair ornaments are mostly used to provide a relatively sophisticated or fancy hairstyle.

Traditional hair ornaments utilizing fiber optics and light sources are characterized by a point of light, or points of light, at the end(s) of the fiber optic(s). A light source near a bundle of fiber optics shines a light through the length of each fiber optic until it ultimately exits from a distal end of the fiber optic. A major objective of these traditional hair ornaments is to prevent the light from exiting the fiber optic (also known as "bleed out"), except from the end of the fiber optic. Bleed-out light is light that is traveling in the cladding or slightly imperfectly down the core of the fiber. At some point this light will leave the fiber, since it is not in one of the modes of the wave guide.

Such hair ornaments provide a luminous hairstyle but often the brilliant aspect of the hair ornament does not match with the hair color of the consumer. Hence, there is a need to improve the existing hair ornament to provide additional hair styling benefits to the consumer.

SUMMARY OF THE INVENTION

A colored hair ornament is provided and comprises a light source; and a plurality of light-transmissive filaments. Each light-transmissive filament has a proximal end, a distal end and a side wall. The proximal end of each light-transmissive filament is arranged to receive light from the light source. One or more light-transmissive filaments of the plurality of light-transmissive filaments comprise a first coating with a first composition comprising one or more cationic polymers to a first portion of the one or more light-transmissive filaments. The one or more light-transmissive filaments comprise a second coating with a second composition comprising one or more anionic polymers to a second portion of the one or more light-transmissive filaments. The first and the second portions of the one or more light-transmissive filaments have one or more common areas. The first coating is underneath the second coating. Optionally, the one or more light-transmissive filaments comprise a plurality of the first and second coatings with the first composition and the second composition in that order to create a plurality of polymeric layers. The cationic polymer is a cationic colored polymer. The anionic polymer is an anionic colored polymer.

A method of customizing the colored hair ornament is provided and comprises at least one or any combination of two or more of:

mechanically altering the surface of one or more light-transmissive filaments of the plurality of light-transmissive filaments;

cutting one or more light-transmissive filaments of the plurality of light-transmissive filaments;

applying a first composition and a second composition, in that order, optionally repeatedly, to the surface of one or more light-transmissive filaments of the plurality of light-transmissive filaments at a respective first and second portion of the one or more light-transmissive filaments, wherein the first and the second portions of the one or more light-transmissive filaments have one or more common areas, wherein the first coating is underneath the second coating;

removing the excess of respectively the first composition and/or the second composition from the one or more light-transmissive filaments of the plurality of light-transmissive filaments; applying energy to one or more light-transmissive filaments of the plurality of light-transmissive filaments in the form of heat, ultrasounds, infrared and/or microwaves; and

wherein said customizing is preferably performed after attaching the hair ornament to the head of the wearer.

A kit for treating hair is provided and comprises:

(a) a hair ornament as defined hereinabove; wherein the hair ornament comprises a light source and a plurality of light-transmissive filaments; and
(b) a first composition comprising one or more cationic polymers;
(c) a second composition comprising one or more anionic polymers;

wherein the cationic polymer is a cationic colored polymer;
wherein the anionic polymer is an anionic colored polymer; and
optionally an applicator to coat the first and second compositions to one or more light-transmissive filaments of the plurality of light-transmissive filaments.

BRIEF DESCRIPTION OF THE DRAWINGS

While the specification concludes with claims particularly pointing out and distinctly claiming the present invention, it is believed that the same will be better understood from the following description read in conjunction with the accompanying drawings in which:

Fig. 1 is a schematic drawing of a light-transmissive filament according to an embodiment of the invention;
Fig. 2 is a schematic drawing of a light-transmissive filament according to an embodiment of the invention;
Fig. 3 is a schematic drawing of a light-transmissive filament according to an embodiment of the invention;
Fig. 4 is a schematic drawing of a light-transmissive filament according to an embodiment of the invention;
Fig. 5 is a schematic block diagram of a colored hair ornament according to an embodiment;

It should be noted that these figures are diagrammatic and not drawn to scale. Relative dimensions and proportions of parts of these figures have been shown exaggerated or reduced in size, for the sake of clarity and convenience in the drawings.

DETAILED DESCRIPTION OF THE INVENTION

Definitions and general

In this document, including in all embodiments of all aspects of the present invention, the following definitions apply unless specifically stated otherwise.
All percentages are by weight (w/w) of the total composition, unless otherwise specified. All ratios are weight ratios, unless otherwise specified. "wt%" means percentage by weight. References to 'parts' e.g. a mixture of 1 part X and 3 parts Y, is a ratio by weight.
"QSP" means sufficient quantity for 100% or for 100g. +/- indicates the standard deviation. All ranges are inclusive and combinable. The number of significant digits conveys neither a limitation on the indicated amounts nor on the accuracy of the measurements. All numerical amounts are understood to be modified by the word "about".
All measurements are understood to be made at 20°C and at ambient conditions, where "ambient conditions" means at 1 atmosphere (atm) of pressure and at 65% relative humidity. "Relative humidity" refers to the ratio (stated as a percent) of the moisture content of air compared to the saturated moisture level at the same temperature and pressure. Relative humidity can be measured with a hygrometer, in particular with a probe hygrometer from VWR® International.
Herein "min" means "minute" or "minutes". Herein "mol" means mole. Herein "g" following a number means "gram" or "grams". All amounts as they pertain to listed ingredients are based on the active level ('solids') and do not include carriers or by-products that may be included in commercially available materials.
Herein, "comprising" means that other steps and other ingredients can be in addition. "Comprising" encompasses the terms "consisting of' and "consisting essentially of'. The first and second compositions, methods, uses, and kits of the present invention can comprise, consist of, and consist essentially of the elements and limitations of the invention described herein, as well as any of the additional or optional ingredients, components, steps, or limitations described herein. Embodiments and aspects described herein may comprise or be combinable with elements, features or components of other embodiments and/or aspects despite not being expressly exemplified in combination, unless an incompatibility is stated.
Where amount ranges are given, these are to be understood as being the total amount of said ingredient in the composition, or where more than one species fall within the scope of the ingredient definition, the total amount of all ingredients fitting that definition, in the composition. For example, if the composition comprises from 1% to 5% fatty alcohol, then a composition comprising 2% stearyl alcohol and 1% cetyl alcohol and no other fatty alcohol, would fall within this scope.
The amount of each particular ingredient or mixtures thereof described hereinafter can account for up to 100%

(or 100%) of the total amount of the ingredient(s) in the composition.

The term "substantially free of' as used herein means less than 1%, less than 0.8%, less than 0.5%, less than 0.3%, or less than an immaterial amount of by total weight of the composition.

The term "molecular weight" or "M.Wt." as used herein refers to the weight average molecular weight unless otherwise stated. The weight average molecular weight may be measured by gel permeation chromatography.

The term "Polymer" as used herein means a chemical formed from the polymerisation of two or more monomers. The term "polymer" shall include all materials made by the polymerisation of monomers as well as natural polymers. Polymers made from only one type of monomer are called homopolymers. Herein, a polymer comprises at least two monomers. Polymers made from two or more different types of monomers are called copolymers. The distribution of the different monomers can be random, alternating or block-wise (i.e. block copolymer). The term "polymer" used herein includes any type of polymer including homopolymers and copolymers.

The term "cationic polymer" as used herein means any polymer comprising an overall charge at full protonation which is positive.

The term "cationic colored polymer" as used herein means any cationic polymer comprising one or more chromophores and/or one or more fluorophores either in the skeleton or as pendent group.

The term "cationic uncolored polymer" as used herein means any cationic polymer which does not comprise any chromophore or fluorophore either in the skeleton or as pendent group.

The term "anionic polymer" as used herein means any polymer comprising an overall charge at full deprotonation which is negative.

The term "anionic colored polymer" as used herein means any anionic polymer comprising one or more chromophores and/or one or more fluorophores either in the skeleton or as pendent group.

The term "anionic uncolored polymer" as used herein means any anionic polymer which does not comprise any chromophore or fluorophore either in the skeleton or as pendent group.

The term "full protonation" as used herein means the state at which the different protonable groups of a polymer are all fully protonated.

The term "full deprotonation" as used herein means the state at which the different deprotonable groups of a polymer are all fully deprotonated.

The term "hair" as used herein means mammalian hair including scalp hair, facial hair and body hair, more preferably hair on the human head and scalp. Hair comprises hair fibers. "Hair shaft" means an individual hair strand and may be used interchangeably with the term "hair." As used herein the term "hair" to be treated may be "living" i.e. on a living body or may be "non-living" i.e. in a wig, hairpiece or other aggregation of non-living keratinous fibers. Mammalian, preferably human hair is preferred.

The term "cosmetically acceptable" as used herein means that the compositions, or components described are suitable for use in contact with human keratinous tissue without undue toxicity, incompatibility, instability, allergic response, and the like. All compositions described herein which have the purpose of being directly applied to keratinous tissue are limited to those being cosmetically acceptable.

The term "separately packaged" as used herein means any form of packaging that prevents a first composition from coming into physical contact, or admixing, with a second composition. "Separately packaged" may mean that the individual first, and second compositions are packaged in separate containers, or alternatively in a single container partitioned such that the first and second compositions are not in physical contact.

The term "kit" as used herein means a packaging unit comprising a plurality of components i.e. a kit of parts. An example of a kit is, for example, a first composition, and a separately packaged second composition. Another kit may comprise application instructions comprising a method and a first and second compositions.

A colored hair ornament is provided and comprises a light source, a plurality of light-transmissive filaments. The one or more light-transmissive filaments of the plurality of light-transmissive filaments comprise a first coating with a first composition comprising one or more cationic polymers to a first portion of the one or more light-transmissive filaments. The first portion of the one or more light-transmissive filaments may be a first portion of the surface of the one or more light-transmissive filaments, preferably all the one or more light-transmissive filaments, more preferably all the surface of the one or more light-transmissive filaments. The one or more light-transmissive filaments of the plurality of light-transmissive filaments comprise a second coating with a second composition comprising one or more anionic polymers to a second portion of the one or more light-transmissive filaments. The second portion of the one or more light-transmissive filaments may be a second portion of the surface of the one or more light-transmissive filaments, preferably all the one or more light-transmissive filaments, more preferably all the surface of the one or more light-transmissive filaments. The first and the second portions of the one or more light-transmissive filaments have one or more common areas. Optionally, the one or more light-transmissive filaments comprise a plurality of the first and second coatings with the first composition and the second composition in that order to create a plurality of polymeric layers. The cationic polymer is a cationic colored polymer. The anionic polymer is an anionic colored polymer.

The present inventors have recognized that it would be desirable to provide a colored hair ornament having a

light-transmissive filament which is versatile enough to create a line of light, or a point of light, or a light of light optionally in addition to a point of light. The different aspects of the light-transmissive filament can provide an elaborated and attractive hair styling for sophisticated hairdresses.

At the same time, the present inventors have recognized that the hair ornament needs to match with the hair color of the consumer. It can be the natural hair color or the color of the dyed hair fibers of the consumer. The one or more light-transmissive filaments of the plurality of light-transmissive filaments as set out hereinafter are not dyed or painted with a flexible paint on their outer surfaces in order to camouflage the one or more light-transmissive filaments while being worn in the hair, or to prevent the bleed-out of the transmitted light. The one or more light-transmissive filaments of the plurality of light-transmissive filaments comprise a plurality of the first and second coatings with the respective first and second compositions one or more times to create a plurality of polymeric layers on the hair. The cationic colored polymer and the anionic colored polymer are chosen to match the color of the hair fibers of the consumer in order to highlight the color of the hair fibers. The colored hair ornament is therefore a sophisticated hair decoration which can highlight the hair style of the consumer but also the color of the natural or dyed hair fibers.

Hence, it is possible to provide the plurality of light-transmissive filaments with the desired color result and color intensity in an easy manner. Indeed, a second composition comprising one or more anionic polymers is applied to the plurality of light-transmissive filaments after a first composition comprising one or more cationic polymers has been applied to the plurality of light-transmissive filaments.

Since the cationic polymers and the anionic polymers which are comprised in respectively the first composition and the second composition are high molecular weight molecules, they usually do not diffuse into the plurality of light-transmissive filaments and also the hair or at least only to a limited extent when compared with dyes used in standard oxidative hair coloring methods. They usually form polymeric layers on the plurality of light-transmissive filaments which are placed on top of each other by alternating the deposition of the cationic polymers and the anionic polymers. Thus, more than once it is possible to obtain more than two polymeric layers on the plurality of light-transmissive filaments and therefore to have a better control on the final color result and color intensity which is obtained. By increasing the number of layers which are applied to the plurality of light-transmissive filaments it is possible to obtain hair ornament colorations having increased color intensity. The user may decide on how many times the sequence of steps should be repeated and therefore have a better control over the color result which is obtained on the colored hair ornament, either to match with the color of the hair fibers or to highlight the color of the natural hair fibers or the dyed hair fibers.

Furthermore, it is particularly advantageous to apply a second composition comprising one or more anionic polymers to the plurality of light-transmissive filaments after having applied a first composition comprising one or more cationic polymers. Indeed, the polymer which is comprised in the second composition is negatively charged and therefore the outer layer of the coated filaments has an electrostatic structure which is similar to the one of the outer layer of natural hair. Therefore it is possible to apply standard cationic conditioners to the plurality of light-transmissive filaments after the coating process.

Also, the anionic polymeric layer may be preferably positioned on top of the cationic polymeric layer. Indeed, the presence of the anionic layer can help to have the possibility of applying a subsequent cationic layer on top of it when repeating the coating process. While not wishing to be bound by theory it is also believed that in some embodiments, the anionic polymeric layer may act as a protective layer for the cationic polymeric layer which is placed underneath and therefore may contribute to a relatively good protection of the hair ornament coloration.

Light-transmissive filament

The colored hair ornament comprises a light source; and a plurality of light-transmissive filaments. A conventional hair ornament comprises a housing, a power supply coupled to the housing, a light source, such as LED, electrically coupled to the power supply and a plurality of light-transmissive filaments such as optical fibers positioned to receive light from the light source and having fiber ends protruding out and away from the housing.

The housing comprises two pieces, a case with hollow compartments, and a sliding lid, which when closed conceals the compartments, or when open allows access to the compartments. The power supply may comprise one or more batteries to power the light source.

Each light-transmissive filament has a proximal end, a distal end and a side wall. The proximal end of each light-transmissive filament is arranged to receive light from the light source.

Fig. 1 is a schematic diagram of a light-transmissive filament 10 according to the present invention. The light-transmissive filament comprise a first coating 70 with a first composition comprising one or more cationic polymers and a second coating 75 with a second composition comprising one or more anionic polymers. The light-transmissive filament comprises a core 20 surrounded by a cladding 30. The light-transmissive filament can be a conventional optical fiber. Conventional optical fibers rely on the principle of total internal reflection to transmit light from one end of the fiber to the other. Fig. 1 shows a light ray 60 entering the fiber 10 at the proximal end 40 of the fiber (nearest to the light source) and exiting the fiber at the distal end 50. The difference in refractive index between the core 20 and the cladding 30

ensures that the light is reflected back into the core every time it reaches the core-cladding interface (as long as the ray is initially coupled into the fiber within a predetermined range of angles). In theory, in a perfect optical fiber, all of the light coupled into the fiber 10 at the proximal end 40 would be carried through the fiber to emerge at the distal end 50.

It would be desirable to create a line of light. A reflective coating may be applied to the distal end of each light-transmissive filament protruding from the light source. The distal ends of the one or more light-transmissive filaments may be cut at a 90-degree angle. The distal end of each light-transmissive filament may be coated with a reflective coating as shown in Fig. 2.

The reflective coating may be a paint with reflective particles that are smaller in size than the diameter of the light-transmissive filaments of the plurality of light-transmissive filaments. Fig. 2 is a schematic diagram of a light-transmissive filament 10 according to the present invention. The distal end of a light-transmissive filament 10 is cut at a 90-degree angle. The distal end 50 of the light-transmissive filament 10 is coated with a reflective coating 80. The light ray 65 traveling axially down the light-transmissive filament is therefore reflected back up the light-transmissive filament 10. The reflected light travels in both the core 20 and the cladding 30 of the light-transmissive filament 10 and thus is scattered sideways and out of the light-transmissive filament 10. The entire length of the light-transmissive filament 10 therefore emanated light and appears as a line of light. The light-transmissive filament comprise a first coating 70 with a first composition comprising one or more cationic polymers and a second coating 75 with a second composition comprising one or more anionic polymers. The color of the light emitted through the light-transmissive filaments 10 can be then modified because the different layers of the first and second compositions act as filters, selectively transmitting predetermined wavelengths of light.

Alternatively, it would be desirable to create a point of light. The distal end protruding out and away from the light source may be cut at an angle to maximize observed brightness of light emitted from the light source. Observed brightness is increased due to the increased surface area of the exit from the distal end of the light-transmissive filament.

The plurality of light-transmissive filaments may be cut at the distal ends at an angle ranging from 15 to 75 degrees, preferably from 30 to 50 degrees, more preferably at an angle of 45 degrees. The angle may range between 15 and 75 degrees, preferably between 30 to 50 degrees, more preferably 45 degrees with respect to the length of the light-transmissive filaments.

Fig. 3 is a schematic diagram of a light-transmissive filament 10 according to the present invention. The distal end 50 of the light-transmissive filament 10 is cut an a 45-degree angle in order to maximize the intensity of light transmitted perpendicular to the fiber length and outwards away from a user towards observers. The remainder of the light 65 travelling axially down the light-transmissive filament 10 that is not reflected outwards perpendicularly is transmitted downward and out the distal end 50. The light-transmissive filament comprise a first coating 70 with a first composition comprising one or more cationic polymers and a second coating 75 with a second composition comprising one or more anionic polymers. The color of the light emitted through the light-transmissive filaments 10 can be then modified because the different layers of the first and second compositions act as filters, selectively transmitting predetermined wavelengths of light. The reflected light transmitted outwards perpendicularly as set out above is also able to be modified because the different layers of the first and second compositions act as filters, selectively transmitting predetermined wavelengths of light.

Alternatively, it would be desirable to allow some or all of the light to escape through the side wall of the optical fiber. This could allow the creation of a glowing strand or "line of light". Hence, each light-transmissive filament may be configured to emit through the side wall at least some of the light received at the proximal end, the light-transmissive filament comprising a first segment of unit length, located at a first distance from the proximal end, the first segment being configured to emit through the side wall a first proportion of the light arriving at the first segment from the proximal end. The light-transmissive filament may further comprise a second segment of unit length, located at a second distance from the proximal end, the second segment being configured to emit through the side wall a second proportion of the light arriving at the second segment from the proximal end. The first distance may be preferably greater than the second distance. An optical property of the light-transmissive filament may vary over a length of the filament such that the first proportion is greater than the second proportion.

Fig. 4 schematically illustrates a preferred light-transmissive filament 15. The filament 15 may have a proximal end 40 for receiving light from a light source and a distal end 50. A side wall may extend between the two ends. In this example, the filament has a circular cross section and therefore the side wall is approximately cylindrical (when the filament is straight). The side wall of the filament may be configured to emit at least some of the light that is received through the proximal end 40 of the filament. An optical property of the filament may vary over the length of the filament so that it is easier for light to escape from some parts of the filament than others. In greater detail: the light-transmissive filament may comprise a first segment located at a first distance from the proximal end. In this first segment, the filament may be configured to emit a first proportion of the light arriving from the proximal end 40. The filament may further comprise a second segment located at a second distance from the proximal end 40. This second segment may be configured to emit a second proportion of the light arriving from the proximal end. The optical property of the filament may vary such that the first proportion is greater than the second proportion.

By varying the optical property in this way, the amount of light escaping from the filament at any local segment along its length can be controlled. A wide variety of effects can be created.

One advantageous example can be a filament 15 in which the proportion of light escaping increases from the proximal end 40 to the distal end 50. In this case, the first distance is greater than the second distance - that is, the first segment is nearer to the distal end 50 than the second segment is. Preferably, the optical property may vary continuously over the length of the filament. This means that any first segment and any second segment (of the same non-trivial length) will have the relationship that the proportion of light that escapes from the first segment is greater than the second segment, provided that the first segment is further from the proximal end 40. This is the example considered in Fig. 4.

The light-transmissive filament comprise a first coating 70 with a first composition comprising one or more cationic polymers and a second coating 75 with a second composition comprising one or more anionic polymers. The color of the light emitted through the light-transmissive filaments 15 escaping from the cladding can be then modified because the different layers of the first and second compositions act as filters, selectively transmitting predetermined wavelengths of light.

The light-transmissive filament may comprise a core 20 and a cladding 30. The optical property that varies over the length of the filament may comprise a property of the cladding 30. Like the optical fiber 10 of Fig. 1, the light-transmissive filament 15 of Fig. 4 comprises a core 20 and a cladding. The core 20 can be substantially similar to the conventional core of Fig. 1.

The cladding may be a partial cladding 32. In a first segment, closer to the distal end 50, a first area of the core 20 may be exposed by the partial cladding 32. In a second segment, closer to the proximal end 40, a second area of the core 20 may be exposed. The first area may be greater than the second area. This means that the proportion of the surface area of the core that is exposed successively may increase from the proximal end 40 to the distal end 50. In this way, by varying a property of the cladding, a greater proportion of light can be allowed to escape at locations closer to the distal end 50.

Without wishing to be bound by theory, it is believed that the filament 15 functions as follows. In the embodiment illustrated in Fig. 4, light is allowed to escape by eliminating the cladding from localized parts of the core 20. The light ray 60 illustrates the effect of this. Where the ray 60 encounters an interface between the core 20 and the partial cladding 32, it is reflected back into the core 20. However, when the light ray 60 encounters an exposed area 34 it is no longer internally reflected and therefore is emitted from the filament. This is believed to be a result of the change in critical angle caused by the removal of the cladding. Other effects may also contribute to the escape of light. For example, the removal of the cladding may also modify the surface of the core in such a way as to promote the escape of light.

Light is coupled into the core 20 at the proximal end 40 of the filament 15. It travels down the filament by internal reflection until it escapes through the side wall of the filament 15. As more light escapes through the side wall, the amount of light remaining within the filament to continue towards the distal end is reduced. Therefore, the amount of light in the filament decays from the proximal end 40 to the distal end 50. If the exposed areas 34 were uniformly distributed over the length of the filament 15, then each ray of light would have an equal chance of escaping through the side wall in any longitudinal segment of a given size. This would result in the filament 15 glowing brighter nearer to the proximal end 40 and glowing less brightly nearer to the distal end 50, because of the decay of light away from the light source, due to the escaping light. To compensate for this, the exposed area per unit length of the filament 15 is increased over the length of the filament, from the proximal end 40 to the distal end 50. Thus, although there is more light being transmitted through the filament nearer to the proximal end 40, this light has a lower chance of escaping through the side wall. There is proportionally less light propagating in the filament nearer to the distal end 50, but this light has a proportionally greater chance of escaping through the side wall, because of the increasing exposed area 34. This can allow a more uniform brightness to be produced over the length of the filament 15.

The light-transmissive filament 15 may be preferably similar in its basic construction to a polymer optical fiber 10. The light-transmissive filament may comprise a core 20 which is formed of Poly(methyl methacrylate) (PMMA). The light-transmissive filament may comprise a cladding, and/or a partial cladding 32 which is formed of a fluorinated polymer, such as a fluorocarbon. The filament 15 may be fabricated with a maximum overall thickness (maximum overall diameter, for a cylindrical filament) of less than 1 mm, preferably less than 500 $\mu$m, more preferably of less than 200 $\mu$m.

Fig. 5 is a schematic block diagram of a colored hair ornament incorporating a plurality of filaments 130 like the filaments 10 or 15 shown in Figs. 1-4. The colored hair ornament 100 comprises a light source 110. In this example, the light source 110 includes one or more Light Emitting Diodes (LEDs). The proximal end 132 of each of the filaments 130 is arranged to receive light from this light source 110. Preferably the filaments are held in a bundle and a lens focuses the light from the light source onto the end of the bundle. The filaments may be held in the bundle by gluing them together at their proximal ends, and/or by crimping them together at their proximal ends with a crimp sleeve or collar.

The colored hair ornament may comprise a fastening means for securing the colored hair ornament to a wearer's hair. The fastening means may be selected from the group consisting of a hair barrette, a hair comb, a hair clip and combinations thereof.

Light is emitted through the side wall over the length of each filament 130. Any light that has not escaped

through the side wall is emitted from the distal end 134 of each filament 130. The filaments 130 may preferably have lengths in the range 2 cm to 100 cm. They are flexible, allowing them to emulate hair. The colored hair ornament may further comprise a power source (preferably a battery, not shown in Fig. 3) for powering the light source 110. It may also comprise a controller for controlling the light source. Further details of ways to control the light source of a hair ornament can be found in the co-pending European patent application filed on the same date, by the present applicant, entitled "Hair Ornament, Control Device, and Method of Controlling a Hair Ornament".

Also, details of ways to produce light-transmissive filaments 15 like the one illustrated in Fig. 4 can be found in the co-pending European patent application filed on the same date, by the present applicant, entitled "Light-transmissive filament". A method for producing the light-transmissive filament may comprise providing a light-transmissive filament. This may be an optical fiber 15 with a core 20 and a cladding 30. The method may then comprise modifying the cladding 30 by removing a portion of it. In this embodiment, the step of modifying the cladding may preferably comprise laser-ablating a portion of the cladding so that an area 34 of the core 20 is exposed, as described already above. Following the laser-ablation, the cladding 30 becomes a partial cladding 32 with exposed areas 34 where the cladding 30 has been removed by the laser, and the optical fiber 10 becomes a light-transmissive filament according to an embodiment of the invention. The laser-ablation may be controlled so that a greater proportion of the cladding is removed in a first segment, closer to the distal end 50, compared with a second segment, closer to the proximal end 40. The proportion of light escaping in a given segment of unit length may vary in direct relation to the proportion of exposed area 34.

The laser power may be preferably selected so that all of the cladding is removed, at the sites where the beam strikes the fiber. In general, it may be difficult to select a laser power that removes all of the cladding while leaving the core completely unscathed. Therefore, in order to ensure that all of the cladding is removed it may be necessary to set the laser power so that a small amount of core material is also removed.

The individual area of cladding removed by each laser strike may be controlled by varying the spot size of the laser. Spot size can be controlled by adjusting the focus of the laser beam. The total area of cladding removed can be controlled by controlling either the size of the individual areas, or the spacing between exposed areas, or a combination of both. Using a smaller spot size and a larger number of individual areas can enable finer control of the amount of cladding removed in any given longitudinal segment of the filament.

The laser may be controlled to create "scratches" spaced at intervals along the length of each filament. Each scratch may be formed by one or more scribe lines created by laser ablation. Each scribe line may correspond to one pass of the laser. In one example, the spot size of the laser is 30 $\mu$m in diameter. The number of scribe lines per scratch is increased towards the distal end of the filament. This increases the proportion of exposed area towards the distal end. The scratches may be evenly or unevenly spaced over the length of the filament.

Alternatively to the laser beam, a chemical treatment may be used. The step of modifying the cladding may comprise chemically treating the cladding to damage it, such that the cladding has a first degree of damage in the first segment and a second degree of damage in the second segment, the first degree of damage being greater than the second degree of damage.

It is possible to produce light-transmissive filaments with desirable properties according to embodiments of the invention by other alternative methods.

For example, the optical property that varies over the length of the filament may comprise a surface-roughness of the filament. This may be appropriate for a filament that comprises a core with no cladding. The proportion of light escaping through the side wall of the filament will vary in direct relation to the roughness of the surface of the filament. Without wishing to be bound by theory, it is believed that increasing the surface roughness has the effect of creating many small facets in the surface of the filament, at different angles. This increases the range of angles for which light propagating inside the filament is able to escape from it. Therefore, by increasing the surface-roughness from the proximal end 40 to the distal end 50 a more uniform brightness of the side wall of the filament may be obtained. Surface roughness can be measured using conventional methods. For example, it is known to measure surface roughness using a roughness tester comprising a thin needle or stylus. The tip of the stylus is mechanically drawn across the surface and the movement of the stylus is measured to determine roughness. This method can be used to measure roughness even at a very fine scale. For example, it is known to use a very thin stylus to measure the roughness of semiconductor or Micro-Electro-Mechanical System (MEMS) devices. The same technique can be used to measure the roughness of a filament according to an embodiment. The surface-roughness may be adjusted by chemical or mechanical treatment of the filament, or by laser ablation using a suitable laser power.

A further alternative for filaments having a core 20 and cladding 30 may be to vary the refractive index of the cladding in the longitudinal direction (that is, along the length of the filament). The refractive index of the cladding determines the range of angles of incidence at which light is reflected internally back into the core 20. Therefore, by varying the refractive index of the cladding 30, light reaching the core-cladding interface at varying angles of incidence can be selectively permitted to escape through the side wall. Longitudinal variation of the refractive index of the cladding 30 may be possible by doping the cladding such that the dopant concentration varies along the length of the fiber. For example, adding germanium can increase the refractive index, while adding fluorine can reduce it. The refractive index

of doped material can be determined by the linear relationship between the doped material's mole percentage and permittivity. Assume that $n_0$ is the refractive index of the host material and $n_1$ is the refractive index of $m_1$ mole-percentage doped material. Then, the refractive index n of m mole-percentage doped material can be interpolated as:

$$n^2 = n_0^2 + \frac{m}{m1}(n_1^2 - n_0^2)$$

Among the methods discussed above, laser-ablation is currently preferred. It allows precise control of the areas 34 of cladding that are removed to expose the core 20. Both the size and position of the exposed areas 34 can therefore be controlled accurately. Chemically treating the cladding can be faster and cheaper than laser-ablation, but it can be more difficult to accurately control the degree of damage to the cladding 30 over the length of the filament. The approach of using surface-roughness to control the escape of light may have the disadvantage that surface-roughness can be modified accidentally during use, for example by abrasion of the filament. Modifying the refractive index longitudinally may be costly.

The overall thickness (diameter) of the filaments may vary over the longitudinal dimension. For example, one or more filaments may have a diameter increasing from the proximal end to the distal end. This can emulate real hair, in which the individual strands of hair are thicker at the ends.

Another possibility is that the filament may comprise a layer of keratin or a layer of melanin, or both. The keratin or melanin may be the outermost layer of the filament. In one case, the keratin or melanin may act as the cladding of the filament. In another case, the keratin or melanin may be an additional layer coated over the cladding of the filament. Keratin and melanin are constituents of natural hair. Therefore, incorporating a layer of keratin and/or melanin in the filament can give the filament a more natural appearance, like real hair, thus mimicking hair. When the filament is not illuminated, it may be less obtrusive in appearance, because its appearance is similar to the strands of hair on the wearers head. And when the filament is illuminated, it may appear as though the wearer's hair itself is glowing. Melanin is a pigment. Therefore, the amount or concentration of melanin may be used to give the filament a desired color. In particular, it can be used to color the filament to even more match the color of a wearer's hair.

## First composition

The one or more light-transmissive filaments of the plurality of light-transmissive filaments comprise a first coating with a first composition comprising one or more cationic polymers to a first portion of the one or more light-transmissive filaments. The cationic polymer is a cationic colored polymer.

The first portion of the one or more light-transmissive filaments may be a first portion of the surface of the one or more light-transmissive filaments, preferably all the one or more light-transmissive filaments, more preferably all the surface of the one or more light-transmissive filaments.The first composition may be applied in one go or step-by-step to the one or more light-transmissive filaments. Applying the first composition step-by-step, may help to ensure that the one or more light-transmissive filaments are saturated with the first composition and may therefore provide a better coverage of the filaments with the first composition.

### Cationic polymer(s)

The first composition comprises one or more cationic polymer(s).

The cationic polymer(s) may be weak cationic polymer(s), or may be strong cationic polymer(s). According to an embodiment, the weak cationic polymer may have a pKa value in a range from 5 to 10, particularly from 6 to 10, and more particularly from 7 to 10, further particularly between 7.5 and 10, and even more particularly between 8 and 10. According to further embodiments, the weak cationic polymer may have a pKa value in a range from 8 to 9.5.

The cationic polymer(s) is a cationic colored polymer.

The one or more light-transmissive filaments may comprise a plurality of the first and second coatings with the first composition and the second composition in that order to create a plurality of polymeric layers. The first composition of the plurality of the first and second coatings may comprise a cationic colored polymer and/or a cationic uncolored polymer.

The cationic polymer(s) may comprise one or more monomer units comprising one or more amino functional groups per polymer chain, wherein the amino functional group is selected from the group consisting of primary, secondary, tertiary, quaternary amino functional groups and mixtures thereof.

The cationic polymer(s) may be selected from the group consisting of polyethyleneimine (linear PEI), branched polyethyleneimine (branched PEI), polyallylamine hydrochloride (PAH), polydiallyldimethylammonium chloride (PDADMAC), polyvinylamine (PVA), copolymers thereof and mixtures thereof.

The cationic polymer(s) may preferably be selected from the group consisting of polyethyleneimine, copolymers thereof and mixtures thereof.
The copolymers may be random or block copolymers.
The cationic polymer(s) may be linear or branched.
The cationic polymer(s) may be selected from the group consisting of:

a) Linear polyethyleneimine of the formula:

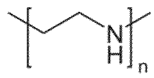

in which n is an integer representing the degree of polymerization, wherein n ranges from 50 to 20,000, alternatively from 100 to 3,500;
b) Branched polyethyleneimine consisting of primary, secondary and tertiary amine groups of the formula:

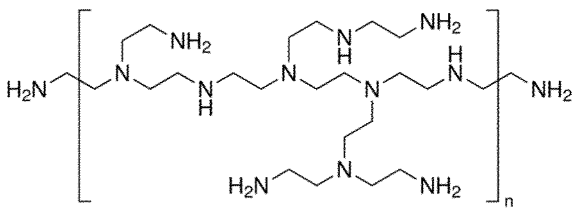

in which n is an integer representing the degree of polymerization, wherein n ranges from 5 to 4,000, alternatively from 50 to 500;
c) Polyallylamine hydrochloride of the formula:

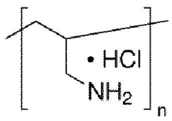

in which n is an integer representing the degree of polymerization, wherein n ranges from 50 to 20,000, alternatively from 150 to 2000; and
d) copolymers thereof and mixtures thereof.

The copolymers may be random or block copolymers.
The cationic polymer(s) may have a charge density at full protonation of at least 0.3, preferably at least 0.6, more preferably at least 0.8, even more preferably at least 1.0 positive charges per monomer unit.
The cationic polymer(s) may have a weight average molecular weight of more than 0.5 kD, preferably from 0.5 kD to 5000 kD, more preferably from 2 kD to 1000 kD, even more preferably from 10 kD to 200 kD, most preferably from 25 kD to 70 kD.
The cationic polymers may comprise one or more compounds selected from the group consisting of cosmetically active molecules, care ingredients, optically active molecules, pharmaceutical active molecules, biomarkers and mixtures thereof.

## Second composition

The one or more light-transmissive filaments of the plurality of light-transmissive filaments comprise a second coating with a second composition comprising one or more anionic polymers to a second portion of the one or more light-transmissive filaments. The first coating is underneath the second coating. The first and the second portions of the one or more light-transmissive filaments have one or more common areas. The anionic polymer is an anionic colored polymer.
The second portion of the one or more light-transmissive filaments may be a second portion of the surface of the one or more light-transmissive filaments, preferably all the one or more light-transmissive filaments, more preferably all the surface of the one or more light-transmissive filaments. The second composition is applied after the first composition to the one or more light-transmissive filaments.

The second composition may be applied in one go or step-by-step to the one or more light-transmissive filaments. Applying the second composition step-by-step, may help to ensure that the one or more light-transmissive filaments are saturated with the second composition and may therefore provide a better coverage of the filaments with the second composition.

Anionic polymer(s)

The second composition comprises one or more anionic polymer(s). The anionic polymer(s) may be weak anionic polymer(s).

The anionic polymer(s) is an anionic colored polymer.

The one or more light-transmissive filaments may comprise a plurality of the first and second coatings with the first composition and the second composition in that order to create a plurality of polymeric layers. The second composition of the plurality of the first and second coatings may comprise an anionic colored polymer and/or an anionic uncolored polymer.

The anionic polymer(s) may comprise one or more monomer unit(s) comprising one or more functional group(s) selected from the group consisting of sulfate, sulfonate, carboxylate, phosphate, phosphonate groups and mixtures thereof. The functional group(s) may preferably be selected from the group consisting of sulfate, sulfonate, carboxylate groups and mixtures thereof.

The second anionic polymer(s) may be selected from the group consisting of polystyrene sulfonate salts (PSS), λ-carrageenan salts, dextran sulfate salts, polyacrylic acid salts (PAA), poly(methacrylic acid) salts, alginic acid salts, carboxymethylcellulose salts, polystyrene sulfonate/polystyrene copolymer salts, copolymers thereof and mixtures thereof. The salts may be sodium salts.

The copolymers may be random or block copolymers.

The anionic polymer(s) may be selected from the group consisting of:

a) Polystyrene sulfonate (PSS) sodium salt of the formula:

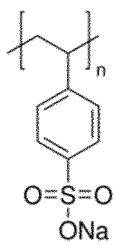

in which n is an integer representing the degree of polymerization, wherein n ranges from 50 to 20,000, alternatively from 150 to 2500;

b) Co-polymer of polystyrene sulfonate (PSS) sodium salt and poly(4-styrenesulfonic acid-co-maleic acid) of the formula:

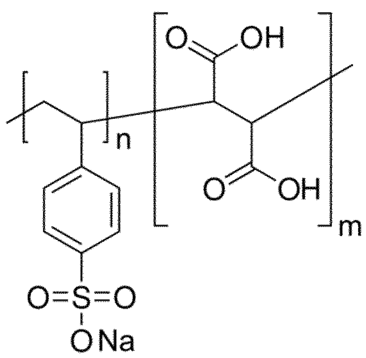

in which n and m are integers representing the degree of polymerization, wherein n+m ranges from 50 to 20,000, alternatively from 150 to 2500;

c) λ-Carrageenan;

d) Dextran sulfate sodium salt;

e) Polyacrylic acid (PAA) of the formula:

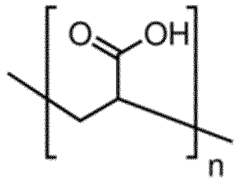

in which n is an integer representing the degree of polymerization, wherein n ranges from 50 to 20,000, alternatively from 150 to 5000;

f) Alginic acid sodium salt;

g) Carboxymethylcellulose sodium salt of the formula:

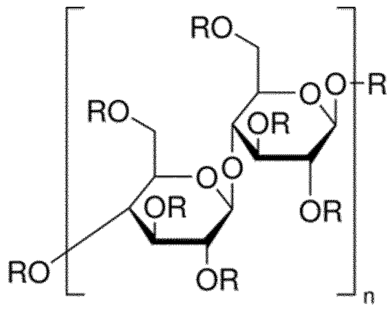

in which:

R is H or $(CH_2)_2COONa$ and
n is an integer representing the degree of polymerization; and

h) copolymers thereof and mixtures thereof.

The anionic polymer(s) may have a charge density at full deprotonation of at least 0.3, preferably at least 0.6, more preferably at least 0.8, even more preferably at least 1.0 negative charges per monomer unit.

The anionic polymer(s) may have a weight average molecular weight of at least 1 kD, preferably from 10 kD to 1000 kD, more preferably from 70 kD to 500 kD.

The anionic polymers may comprise one or more compounds selected from the group consisting of cosmetically active molecules, care ingredients, optically active molecules, pharmaceutical active molecules, biomarkers and mixtures thereof.

Cationic colored polymers and anionic colored polymers

The cationic colored polymers and the anionic colored polymers used in the present invention may comprise at least one chromophore and/or at least one fluorophore. Any of the hereinbefore exemplified cationic polymers or anionic polymers may comprise at least one chromophore and/or at least one fluorophore either in the skeleton or as pendent group.

The chromophores may be selected from the group consisting of nitrobenzene, azo, imine, hydrazine, phenothiazine, xanthene, phenanthridine, phthalocyanin and triarylmethane-based dyes, derivatives thereof, derivatives obtained from direct dyes containing a carbonyl group and mixtures thereof.

The chromophores may be selected from the group consisting of acridone, benzoquinone, anthraquinone, naphthoquinone, benzanthrone, anthranthrone, pyranthrone, pyrazolanthrone, pyrimidinoanthrone, flavanthrone, indanthrone, flavone, (iso)violanthrone, isoindolinone, benzimidazolone, isoquinolinone, anthrapyridone, pyrazoloquinazolone, perinone, quinacridone, quinophthalone, indigoid, thioindigo, naphthalimide, anthrapyrimidine, diketopyrrolopyrrole and coumarin dyes, derivatives thereof and mixtures thereof.

The chromophores may be substituted with at least one amine, hydroxyl, sulfate, sulfonate, carboxylate, phosphate, phosphonate, or halide group. These chromophores may be selected from the group consisting of derivatives of acidic nitro direct dyes, acidic azo dyes, acidic azine dyes, acidic triarylmethane dyes, acidic indoamine dyes and non-quinone acidic natural dyes, and mixtures thereof.

The chromophores may also be selected from derivatives of any of the direct dyes exemplified in the direct dyes section of this application.

The fluorophores may be selected from the group consisting of radicals derived from di-, tetra- or hexa-sulfonated triazine-stilbenes, coumarins, imidazolines, diazoles, triazoles, benzoxazolines, biphenyl-stilbenes optical brighteners, and mixtures thereof.

A cationic colored polymer or an anionic colored polymer may comprise the same type of chromophore and/or fluorophore or different types of chromophores and/or fluorophores. Having a cationic colored polymer or an anionic colored polymer with different types of chromophores and/or fluorophores may help to cover a broad range of color shades which can be obtained on the plurality of light-transmissive filaments which are colored according to the present invention wherein the first composition and the second composition comprises the respective cationic colored polymer and the respective anionic colored polymer.

The cationic colored polymers may be selected from the group consisting of:

i. Colored linear or branched polyethyleneimine (PEI) of the formula:

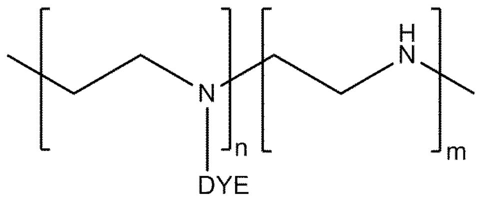

in which n and m are integers representing the degree of polymerization, wherein m/n ranges from 0 to 1,000 provided that n is different from 0 and/or m+n ranges from 50 to 20,000, alternatively from 100 to 3,500;

ii. Colored polyallylamine of the formula:

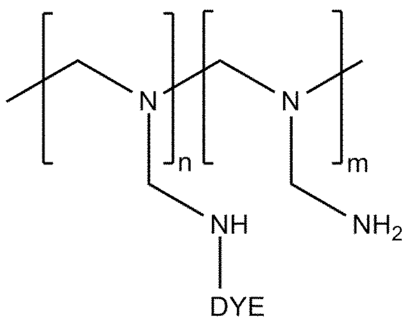

in which n and m are integers representing the degree of polymerization, wherein m/n ranges from 0 to 1,000 provided that n is different from 0 and/or m+n ranges from 50 to 20,000, alternatively from 150 to 2000;

iii. Colored polydiallyldimethylammonium chloride of the formula:

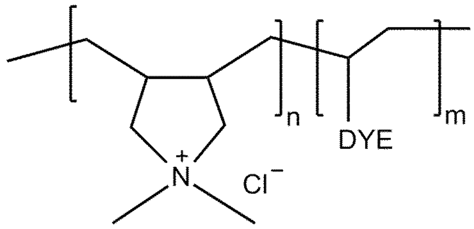

in which n and m are integers representing the degree of polymerization, wherein m/n ranges from 0 to 1,000 provided that n is different from 0 and/or m+n ranges from 10 to 20,000, alternatively from 100 to 4000;
wherein DYE represents the chromophore or the fluorophore that is attached to the polymer skeleton either directly or via a saturated or unsaturated, linear or branched hydrocarbon-based chain containing from 1 to 10 carbon atoms or from 1 to 6 carbon atoms. These polymers may be block copolymers or random copolymers.

The cationic colored polymers may be selected from linear polyethyleneimine (PEI) - Rhodamine B of the formula:

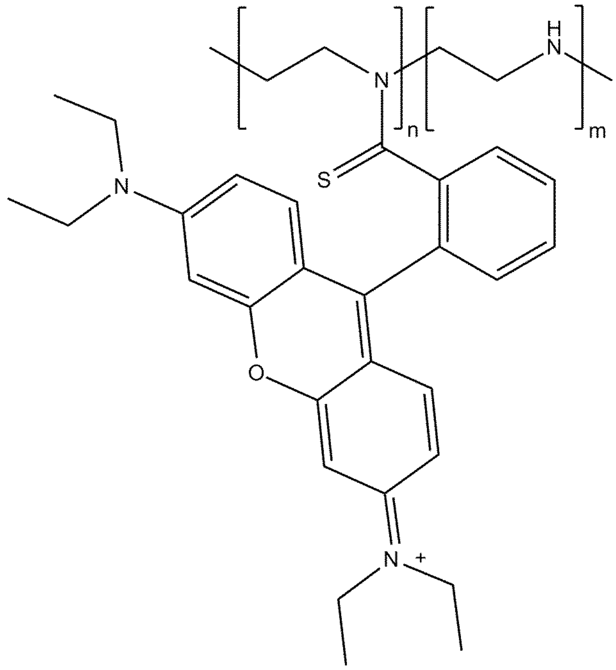

in which n and m are integers representing the degree of polymerization, wherein m/n may range from 0 to 1,000 provided that n is different from 0 and/or m+n may range from 50 to 20,000, alternatively from 100 to 3,500. These polymers may be block copolymers or random copolymers.

The anionic colored polymers may be selected from anionic colored polymers with the following formula:

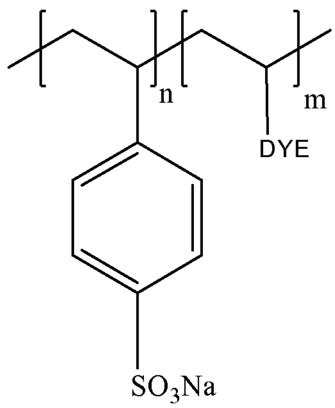

in which n and m are integers representing the degree of polymerization, wherein m/n may range from 0 to 1,000 provided that n is different from 0 and/or m+n may range from 50 to 20,000, alternatively from 150 to 500;
wherein DYE represents the chromophore or the fluorophore that is attached to the polymer skeleton either directly or via a saturated or unsaturated, linear or branched hydrocarbon-based chain containing from 1 to 10 carbon atoms or from 1 to 6 carbon atoms. These polymers may be block copolymers or random copolymers.

Pre-treatment

The one or more light-transmissive filaments may be pre-treated to modify the number of positive or negative charges in some portions of the light-transmissive filaments or all over the light-transmissive filaments, by chemical or physical means selected from the group consisting of plasma treatment, ozone treatment, dry or wet ion-implantation treatment and combinations thereof.

Solvents

The first and the second compositions may further comprise at least one solvent. The solvent may be selected from water, or a mixture of water and at least one organic solvent to dissolve the compounds that would not typically be sufficiently soluble in water. The first to second compositions may be aqueous solutions.

Suitable organic solvents include, but are not limited to: C1 to C4 lower alkanols (such as ethanol, propanol, isopropanol); aromatic alcohols (such as benzyl alcohol and phenoxyethanol); polyols and polyol ethers (such as carbitols, 2-butoxyethanol, propylene glycol, propylene glycol monomethyl ether, diethylene glycol monoethyl ether, monomethyl ether, hexylene glycol, glycerol, ethoxy glycol, butoxydiglycol, ethoxydiglycerol, dipropyleneglycol, polygylcerol); propylene carbonate; and mixtures thereof.

The solvent may be selected from the group consisting of water, ethanol, propanol, isopropanol, glycerol, 1,2-propylene glycol, hexylene glycol, ethoxy diglycol, and mixtures thereof.

Typically, the first and/or second compositions may comprise water as a main ingredient, particularly in a total amount ranging from at least 50%, alternatively from at least 60%, alternatively from at least 70%, by total weight of the first and/or second composition. Typically, when present, the first and/or second composition may comprise a total amount of organic solvents ranging from about 1% to about 30%, by total weight of the first and/or second composition.

Concentrations

The first and/or the second composition may comprise a total concentration of cationic polymers which is ranging from 0.1 g/L to 100 g/L, alternatively from 0.5 g/L to 100 g/L, alternatively from 2g/L to 50 g/L, alternatively from 5 g/L to 10 g/L.

pH

The first and/or second composition may have a pH ranging from 2 to 14, alternatively from 3 to 11, alternatively from 5 to 10, alternatively from 7 to 9.

Salt

The first and/or the second composition may comprise a cosmetically acceptable salt at a concentration ranging from 0 to 1.5 mol/L, alternatively from 0.05 to 1 mol/L, alternatively from 0.2 to 0.5 mol/L. The first and/or the second composition may comprise the same cosmetically acceptable salt(s) or different cosmetically acceptable salt(s).

In preferred embodiments, the first composition may comprise a cosmetically acceptable salt at a concentration that is higher than the concentration of the cosmetically acceptable salt in the second composition. Alternatively, the first composition may comprise a cosmetically acceptable salt at a concentration that is lower than the concentration of the cosmetically acceptable salt in the second composition. Alternatively, the first composition may comprise a cosmetically acceptable salt at a concentration that is equal to the concentration of the cosmetically acceptable salt in the second composition.

The cosmetically acceptable salt may be selected from the group consisting of an organic salt, a mineral salt and mixture thereof. The organic salt may be sodium citrate. The mineral salt may be selected from the group consisting of sodium chloride, ammonium sulfate, magnesium chloride, calcium chloride and mixtures thereof. The cosmetically acceptable salt may be sodium chloride.

Adjusting the concentration of the cosmetically acceptable salt in the first composition can provide the following benefits. For instance, using higher concentrations of cosmetically acceptable salts in the first composition comprising the cationic colored polymer (e.g. up to 1 mol/L) has the effect that a greater number of negatively charged ions can gather around each cationic polymer chain. This leads to the formation of a strong electrostatic shield around each polymer chain. The resulting decrease of positive charge in the immediate surroundings of each polymer chain has the effect that only those parts of the polymer chain which have still enough positive charge will ionically bind to the negatively charged light-transmissive filament surface. The number decrease of anchoring sites of each polymer chain results in an undulated orientation of each cationic colored polymer, e.g., on the light-transmissive filament surface, thereby

enabling the binding of a greater number of cationic colored polymers. The greater the number of bound cationic colored polymers on a defined light-transmissive filament surface portion, the more intensive the color of this portion. Thus, adjusting the salt concentration, particularly in the first composition, may be particularly useful to modify the color intensity.

Optional ingredients for the first and/or the second compositions

The first and/or the second compositions according to the present invention may comprise, in addition to the ingredients indicated above, further ingredients in order to further enhance the properties of the first and second compositions, as long as these are not excluded by the claims.
Suitable further optional ingredients include, in a cosmetically acceptable carrier, but not limited to: solvents; ether of water-soluble polyhydric alcohol, thickening system, anti-freeze agent; alkalizing agents; chelants; radical scavengers; pH modifiers and buffering agents; rheology modifiers; carbonate ion sources; peroxymonocarbonate ion sources; surfactants; perfume; enzymes; dispersing agents; peroxide stabilizing agents; oxidative dye precursors, direct dyes, colored materials, pigments, antioxidants; natural ingredients (such as proteins, protein compounds, and plant extracts); conditioning agents (such as silicones and cationic polymers); ceramides; preservatives; opacifiers and pearling agents (such as titanium dioxide and mica); and mixtures thereof. The further optional ingredients may be present in the first and/or second composition in an amount ranging from 0% to 20% by weight, relative to the total weight of the first and/or second composition.
Suitable further ingredients referred to above, but not specifically described below, are listed in the International Cosmetics Ingredient Dictionary and Handbook, (8th ed.; The Cosmetics, Toiletry, and Fragrance Association). Particularly, vol. 2, sections 3 (Chemical Classes) and 4 (Functions), which are useful in identifying specific adjuvants to achieve a particular purpose or multipurpose.

Method of customizing the colored hair ornament

Another aspect relates to a method for customizing the colored hair ornament as set out herein before, the method comprising at least one or any combination of two or more of:

mechanically altering the surface of one or more light-transmissive filaments of the plurality of light-transmissive filaments;
cutting one or more light-transmissive filaments of the plurality of light-transmissive filaments;
applying a first composition and a second composition, as set out hereinabove, in that order, optionally repeatedly, to the surface of one or more light-transmissive filaments of the plurality of light-transmissive filaments at a respective first and second portion of the one or more light-transmissive filaments, wherein the first and the second portions of the one or more light-transmissive filaments have one or more common areas, wherein the first coating is underneath the second coating;
removing the excess of respectively the first composition and/or the second composition from the one or more light-transmissive filaments of the plurality of light-transmissive filaments;
applying energy to one or more light-transmissive filaments of the plurality of light-transmissive filaments in the form of heat, ultrasounds, infrared and/or microwaves; and
wherein said customizing is preferably performed after attaching the hair ornament to the head of the wearer.

The method may begin with a first step, in which the colored hair ornament 100 is attached to the hair of a wearer. The attachment may be achieved in any suitable way. Preferably, the colored hair ornament 100 may comprise a fastening for releasably attaching the hair ornament to the hair or head of the wearer. The fastening may comprise a hair-band, grip, clip, pin, comb, jaws or clamp, for example.
After the hair ornament is attached to the hair, one or more light-transmissive filaments are mechanically altered, in a second step. The mechanical alteration may comprise abrading, scraping, or scratching the filament to modify its optical properties. For example, by scraping a blade of a scissors along a section of the filament, the cladding may be damaged or removed in that section. This can increase the escape of light from that section of the filament, so that the filament glows brighter there.
Next, one or more of the filaments may be cut. This can allow the hair ornament to be incorporated into a hair style in a more integrated fashion, for example by cutting the hair ornament to the same length as the wearer's hair.
In another step, a first composition and then a second composition may be applied to one or more of the filaments. The first composition and the second composition may be applied to the filaments at the same time as applying it to the wearer's hair. Again, this can allow the colored hair ornament to be integrated to a greater extent into the hairstyle. It can also modify the color of the light emitted through the filaments, because the first and the second compositions can act as a filter, selectively transmitting predetermined wavelengths of light.

In another, a heat treatment may be applied to the hair. This may comprise curling the hair using curling tongs. The heat treatment may be applied also to the filaments which are embedded in the hair. In this way, the filaments can be curled similarly to the hair. Care is preferably taken to ensure that the temperature is not too hot and/or is not applied for too long, so as to avoid melting the filaments.
The method may be preferably carried out by a hair dresser, stylist or colorist, in a hair salon, concurrently with cutting, styling, or coloring the wearer's hair.

Applicators

The first to second compositions may be applied to the one or more light-transmissive filaments using an applicator such as a brush or a sponge. Alternatively, the first to second compositions may be applied to the one or more light-transmissive filaments by spraying or foaming the first to second compositions to the filaments or by dipping the one or more light-transmissive filaments into the first to second compositions. Alternatively, the first to second composition may be applied to the one or more light-transmissive filaments using printing technology.

Kit

The present invention also relates to a kit for treating hair comprising:

(a) a hair ornament as defined hereinabove; wherein the hair ornament comprises a light source and a plurality of light-transmissive filaments; and
(b) a first composition comprising one or more cationic polymers;
(c) a second composition comprising one or more anionic polymers; wherein the cationic polymer is a cationic colored polymer;
wherein the anionic polymer is an anionic colored polymer; and
optionally an applicator to coat the first and second compositions to one or more light-transmissive filaments of the plurality of light-transmissive filaments.

The kit may preferably consist of a packaging comprising the hair ornament in a first compartment, the first composition as set out hereinabove in a second compartment, the second composition as set out hereinabove in a third compartment and an applicator preferably comprising a brush or sponge head, in a fourth compartment.
The kit may also comprise an instructional material for use of the hair ornament and how to coat the first and the second compositions on the surfaces of the plurality of light-transmissive filaments. The instructional material can contain instructions how to use the first and the second compositions with the applicator. Also, the instructional material can contain further instructions how to prepare the first and the second compositions.

EXAMPLES

The following examples further describe and demonstrate embodiments within the scope of the present invention. The examples are given solely for the purpose of illustration, and are not to be construed as limitations of the present invention since many variations thereof are possible without departing from its scope.

Hair ornaments E1-E4

**Example E1**

In a first Example E1, the light-transmissive filament was a plastic optical fiber marketed by Asahi Kasei E-Materials Corporation under the product designation DB-175. This comprises a PMMA core and a fluorinated polymer cladding.
The hair ornament of Example E1 comprised a housing having a hair barrette as a fastening means, a power supply coupled to the housing, a light source, which was a LED, electrically coupled to the power supply and a plurality of about 30 light-transmissive filaments positioned to receive light from the light source and having fiber ends protruding out and away from the housing.
The housing comprised two pieces, a case with hollow compartments, and a sliding lid, which when closed concealed the compartments, or when open allowed access to the compartments. The power supply comprised two batteries to power the light source. The filaments were held in a bundle and a lens focused the light from the light source onto the end of the bundle. The filaments were held in the bundle by gluing them together at their proximal ends. They could also be crimped together at their proximal ends with a crimp sleeve or collar.

**Example E2**

In the Example E2, the starting light-transmissive filament for this example was a plastic optical fiber marketed by Asahi Kasei E-Materials Corporation under the product designation DB-175. This comprises a PMMA core and a fluorinated polymer cladding.

The distal ends of a bundle of about 30 fibers were cut at a 90-degree angle and coated with a reflective coating. A thin silver film was coated onto the distal end surfaces of the plurality of the light-transmissive filaments using a chemical technique with Tollen's reagent.

The preparation of Tollen's reagents started with adding 2% ammonia solution drop-by-drop into 2 mL of 0.1 M silver nitrate solution. After the brown precipitate was totally dissolved, 1.4 mL of 0.8 M KOH was added to form a black precipitate in the solution. Subsequently, ammonia solution was added drop wise into the solution. Once the black precipitate was dissolved, Tollen's reagent was acquired.

Before silver mirror coating, the distal end surfaces of the plurality of the light-transmissive filaments were dipped into a 0.2% tin (II) chloride dehydrate solution to sensitize the coating area. After rinsing thoroughly with deionized water and blow-drying with dinitrogen, the coating area was dipped into Tollen's reagent. Subsequently, 0.4 mL of 0.25 M glucose was rapidly added; the distal end surfaces of the plurality of the light-transmissive filaments were then kept in the reagent for a period of 5 min to form the silver mirror. Afterwards, the plurality of the light-transmissive filaments was removed from the reagent and rinsed with deionized water and blow-dried with dinitrogen.

The hair ornament of Example E2 comprised a housing having a hair barrette as a fastening means, a power supply coupled to the housing, a light source, which was a LED, electrically coupled to the power supply and a plurality of the above about 30 light-transmissive filaments positioned to receive light from the light source and having fiber ends protruding out and away from the housing.

The housing comprised two pieces, a case with hollow compartments, and a sliding lid, which when closed concealed the compartments, or when open allowed access to the compartments. The power supply comprised two batteries to power the light source. The filaments were held in a bundle and a lens focused the light from the light source onto the end of the bundle. The filaments were held in the bundle by gluing them together at their proximal ends. They could also be crimped together at their proximal ends with a crimp sleeve or collar.

**Example E3**

In the Example E3, the starting light-transmissive filament for this example was a plastic optical fiber marketed by Asahi Kasei E-Materials Corporation under the product designation DB-175. This comprises a PMMA core and a fluorinated polymer cladding.

The distal ends of a bundle of about 30 fibers were cut at a 45-degree angle to maximize brightness of light points.

The hair ornament of Example E3 comprised a housing having a hair barrette as a fastening means, a power supply coupled to the housing, a light source, which was a LED, electrically coupled to the power supply and a plurality of the above about 30 light-transmissive filaments positioned to receive light from the light source and having fiber ends protruding out and away from the housing.

The housing comprised two pieces, a case with hollow compartments, and a sliding lid, which when closed concealed the compartments, or when open allowed access to the compartments. The power supply comprised two batteries to power the light source. The filaments were held in a bundle and a lens focused the light from the light source onto the end of the bundle. The filaments were held in the bundle by gluing them together at their proximal ends. They could also be crimped together at their proximal ends with a crimp sleeve or collar.

**Example E4**

In the Example E4, the light-transmissive filaments were prepared by laser ablation. The starting light-transmissive filament for this example was a plastic optical fiber marketed by Asahi Kasei E-Materials Corporation under the product designation DB-175. This comprises a PMMA core and a fluorinated polymer cladding.

A carbon dioxide ($CO_2$) laser with wavelength 10 $\mu$m and 30W power was used for laser ablation. The laser is designed to cut plastic and textiles but has an engraving mode at which it emits approximately 25% of the maximum output power. This engraving mode was used to ablate the cladding selectively.

A bundle of about 30 fibers were engraved together. Each fiber had a diameter of 175 $\mu$m $\pm$15 $\mu$m. The fibers were laid out side by side. The fibers were engraved intermittently along their length by pulsing the laser to create separate exposed areas. The fibers were held fixed. The laser was scanned across the bundle, to engrave all of the side-by-side fibers, and scanned longitudinally along the length of the fibers to engrave each fiber intermittently over its length. The exposed areas where the cladding was ablated by the laser were arranged more densely toward the distal end of the fibers and less densely towards the proximal end. The density gradient was approximately linear over the

length of each fiber. The size of each exposed area was substantially constant over the length of each fiber, while the spacing between exposed areas reduced (approximately linearly) from the proximal end to the distal end. The laser beam was oriented substantially perpendicular to the longitudinal axis of the fibers. The cladding was removed on the side of the fibers facing the laser source. It was also removed on the side facing away from the laser source, because the core acts like a cylindrical lens, focusing the laser beam.

The hair ornament of Example E4 comprised a housing having a hair barrette as a fastening means, a power supply coupled to the housing, a light source, which was a LED, electrically coupled to the power supply and a plurality of the above about 30 light-transmissive filaments positioned to receive light from the light source and having fiber ends protruding out and away from the housing.

The housing comprised two pieces, a case with hollow compartments, and a sliding lid, which when closed concealed the compartments, or when open allowed access to the compartments. The power supply comprised two batteries to power the light source. The filaments were held in a bundle and a lens focused the light from the light source onto the end of the bundle. The filaments were held in the bundle by gluing them together at their proximal ends. They could also be crimped together at their proximal ends with a crimp sleeve or collar.

In the following section the solvent used to prepare the different compositions is water, unless otherwise specified.

**Synthesis methods for obtaining the different cationic or anionic colored polymers used in the examples:**

**Cationic colored polymers**

• Polyallylamine hydrochloride labeled with Rhodamine B isothiocyanate (PAH-RhoB_iso):

- Starting materials:

- Polyallylamine hydrochloride (PAH), Mw=56,000 Da (CAS: 71550-12-4) available from Sigma-Aldrich
- Rhodamine-B isothiocyanate (RhoB_iso) (CAS: 36877-69-7) available from Sigma-Aldrich

- Synthesis method:

The following method has been used for labeling Polyallylamine hydrochloride (PAH) with Rhodamine B isothiocyanate (RhoB_iso):

1) Dissolving 60 mg of Polyallylamine hydrochloride (PAH) in 10 mL of carbonate buffer (pH 9);
2) Mixing the dissolved polymer with 1 mg of Rhodamine-B isothiocyanate (RhoB_iso) dissolved in 1 mL of DMSO;
3) Stirring for 24h at 4°C and dialyzing against distilled water the resultant mixture.

• Branched polyethyleneimine labeled with Rhodamine B (PEI- RhoB_iso) :

- Starting materials:

- Branched polyethyleneimine (PEI), LUPASOL G 500, Mw=25,000 Da (CAS: 9002-98-6) available from BASF
- Rhodamine-B isothiocyanate (RhoB_iso) (CAS: 36877-69-7) available from Sigma-Aldrich

- Synthesis method:

The same method as for labeling Polyallylamine hydrochloride with Rhodamine B isothiocyanate has been used, wherein PAH was replaced by PEI.

• Branched polyethyleneimine labeled with Reactive Red 180 (PEI- Red) :

- Starting materials:

- Branched polyethyleneimine (PEI) (LUPASOL G 500), Mw=25,000 Da, available from BASF (CAS: 9002-98-6)
- Reactive Red 180 available from S3 Chemicals (CAS: 72828-03-6).

- Synthesis method:

The following method has been used for labeling Branched polyethyleneimine (PEI) with Reactive Red 180 (Red):

1) Dissolving 12.5 g of a 40 wt% solution of Branched polyethyleneimine (PEI) in a 200 ml methanol solution containing 14.05 g of Reactive Red 180;
2) Stirring the suspension at 60°C for 1 hour;
3) Further stirring the resultant mixture at room temperature for 12 h;
4) Centrifuging the resultant mixture and collecting the supernatant;
5) Adding methanol to the precipitate, centrifuging the mixture and collecting the supernatant;
6) Repeating step 5) until the resulting supernatant is colorless;
7) Mixing all the resulting supernatant solutions from steps 4) to 6);
8) Adding 12.5 ml of a 32 wt% hydrochloric acid solution to the resulting mixture from step 7)
9) Centrifuging the resulting suspension and collecting the precipitate;
10) Washing the precipitate with acetone until the supernatant is colorless;
11) Drying the precipitate and dissolving it in water;
12) Dialyzing the resulting solution against a solution of 0.15 M NaCl and $10^{-4}$ to $10^{-5}$ M HCl
13) Freeze-drying the product

• Branched polyethyleneimine (PEI) labeled with Remazol brilliant Blue R (PEI- Blue) :

- Starting materials:

- Branched polyethyleneimine (PEI), LUPASOL G 500, Mw=25,000 Da (CAS: 9002-98-6) available from BASF
- Remazol brilliant Blue R available from Sigma-Aldrich (CAS: 2580-78-1)

- Synthesis method:

The same method as for labeling Branched polyethyleneimine with Reactive Red 180 has been used wherein Reactive Red 180 was replaced by Remazol brilliant Blue R and wherein in step 1) 12.5 g of a 40 wt% Branched polyethyleneimine (PEI) solution were dissolved in a 200 ml methanol solution containing 7.3 g of Remazol brilliant Blue R.

• Branched polyethyleneimine labeled with Reactive Blue 116 (PEI-Cyan) :

- Starting materials:

- Branched polyethyleneimine (PEI), LUPASOL G 500, Mw=25,000 Da (CAS: 9002-98-6), available from BASF
- Reactive Blue 116 (CAS: 61969-03-7) available from mijn-eigen.nl.

- Synthesis method:

The same method as for labeling Branched polyethyleneimine with Reactive Red 180 has been used wherein Reactive Red 180 was replaced by Reactive Blue 116 and wherein in step 1) 12.5 g of a 40 wt% Branched polyethyleneimine (PEI) solution were dissolved in a 200 ml methanol solution containing 11.1 g of Reactive Blue 116.

• Polydiallyldimethylammonium chloride copolymerized with Methacryloxyethyl thiocarbamoyl rhodamine B (PDADMAC-RhoB) :

- Starting materials:

- Monomeric diallyldimethylammonium chloride (CAS. 7398-69-8) available from Sigma-Aldrich
- Methacryloxyethyl thiocarbamoyl rhodamine B (RhoB), available from Polysciences

- Synthesis method:

1.61 g monomeric diallyldimethylammonium chloride and 33 mg methacryloxyethyl thiocarbamoyl rhodamine B were copolymerized in 20 mL 50% methanol at 80 °C under nitrogen atmosphere for 24 hours using 10 mg potassium peroxodisulfate as initiator. After polymerization, the colored polymer was dialyzed against distilled water.

**Anionic colored polymers**

• Polystyrene sulfonate copolymerized with Rhodamine B isothiocyanate (PSS-RhoB) :

- Starting materials:

- Monomeric Sodium 4-vinylbenzenesulfonate (CAS: 2695-37-6) available from Sigma-Aldrich.
- Methacryloxyethyl thiocarbamoyl rhodamine B (RhoB), available from Polysciences

- Synthesis method:

The same method as for copolymerizing Polydiallyldimethylammonium chloride with Methacryloxyethyl thiocarbamoyl rhodamine B has been used wherein 1.61 g monomeric diallyldimethylammonium chloride has been replaced by 2.05 g monomeric Sodium 4-vinylbenzenesulfonate.

**Cationic uncolored polymer used in the following examples**

- Branched polyethyleneimine (PEI), LUPASOL G 500, Mw=25,000 Da (CAS: 9002-98-6) available from BASF
-

**Anionic uncolored polymers used in the following examples**

- Poly(methacrylic acid) sodium salt (PMAA), Mw=15,000 Da (CAS: 25087-26-7) available from Polysciences, Inc.
- Polystyrene sulfonate sodium salt (PSS), Mw=70,000 Da (CAS: 25704-18-1) available from Sigma-Aldrich.
- Lambda-Carrageenan (CAS: 9064-57-7) available from Fluka
- Dextran sulfate sodium salt, Mw=500,000 Da (CAS: 9011-18-1) available from Fluka.
- Sodium alginate (CAS: 9005-38-3) available from Fagron.

First and Second composition Example F1, wherein the first composition comprises a cationic colored polymer and the second composition comprises an anionic colored polymer

**Example F1**

| First Composition | |
|---|---|
| **Ingredients** | **g/l** |
| PEI-Cyan | 5.00 (0.5 wt%) |
| NaCl | 11.69 (0.2 mol/l) |
| Triethano lamine | 7.46 (0.05 mol/l) |
| pH adjusted to 8 by adding 1.0 mol/l NaOH or 1.0 mol/l HCl | |
| **Second Composition** | |
| **Ingredients** | **g/l** |
| PSS-RhoB | 5.00 (0.5 wt%) |
| NaCl | 11.69 (0.2 mol/l) |
| Triethanolamine | 7.46 (0.05 mol/l) |
| pH adjusted to 8 by adding 1.0 mol/l NaOH or 1.0 mol/l HCl | |

Preparation of the colored hair ornaments

Each of the plurality of light-transmissive filaments of the above Examples E1-E4 has been colored according to the following protocol:

(i) Preparing the first and second compositions shortly before application;
(ii) Dipping the plurality of about 30 light-transmissive filaments of the respective Examples E1-E4 into 5 mL of the first composition at 55°C in a test tube;
(iii)Agitating the first composition with the filaments for 15 min at 55°C in a laboratory-type drying cabinet;
(iv)Rinsing the filaments with lukewarm tap water at a temperature of 30°C to 35°C;
(v) Dipping the filaments into 5 mL of the second composition at 55°C in a test tube;
(vi)Agitating the second composition with the filaments for 15 min at 55°C in a laboratory-type drying cabinet;
(vii)Rinsing the filaments with lukewarm tap water at a temperature of 30°C to 35°C.

The best lustre effect was obtained with the combination of Example E4 - Example F1. Each colored hair ornament led therefore to a sophisticated hair decoration which was able to highlight the hair style but also the color of the natural hair fibers and/or the color of the dyed hair fibers. The color of the light emitted through the filaments was modified because the first composition and the second composition acted as a filter, selectively transmitting predetermined wavelengths of light. Because of this effect, the color of the surrounded hair fibers was further highlighted.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

**1.** A colored hair ornament (100) comprising:

a light source (110); and
a plurality of light-transmissive filaments (10, 15, 130);
wherein each light-transmissive filament has a proximal end (40, 132), a distal end (50, 134) and a side wall, wherein the proximal end of each light-transmissive filament is arranged to receive light from the light source;

wherein one or more light-transmissive filaments of the plurality of light-transmissive filaments comprise a first coating (70) with a first composition comprising one or more cationic polymers to a first portion of the one or more light-transmissive filaments; and
wherein the one or more light-transmissive filaments comprise a second coating (75) with a second composition comprising one or more anionic polymers to a second portion of the one or more light-transmissive filaments;
wherein the first and the second portions of the one or more light-transmissive filaments have one or more common areas;
wherein the first coating is underneath the second coating;
optionally wherein the one or more light-transmissive filaments comprise a plurality of the first and second coatings with the first composition and the second composition in that order to create a plurality of polymeric layers;
wherein the cationic polymer is a cationic colored polymer; and
wherein the anionic polymer is an anionic colored polymer.

**2.** The colored hair ornament of claim 1, wherein a reflective coating is applied to the distal end of each light-transmissive filament protruding from the light source.

**3.** The colored hair ornament of claim 1, wherein the distal end protruding out and away from the light source is cut at an angle to maximize observed brightness of light emitted from the light source, wherein the angle ranges from 15 to 75 degrees.

**4.** The colored hair ornament of claim 1, wherein each light-transmissive filament is configured to emit through the side wall at least some of the light received at the proximal end,
the light-transmissive filament comprising a first segment of unit length, located at a first distance from the proximal end, the first segment being configured to emit through the side wall a first proportion of the light arriving at the first segment from the proximal end;
the light-transmissive filament further comprising a second segment of unit length, located at a second distance from the proximal end, the second segment being configured to emit through the side wall a second proportion of the light arriving at the second segment from the proximal end;
wherein first distance is preferably greater than the second distance; and
wherein an optical property of the light-transmissive filament varies over a length of the filament such that the first proportion is greater than the second proportion.

**5.** The colored hair ornament of any preceding claim, wherein the light-transmissive filament comprises a core and a cladding, preferably wherein the core is made of PMMA.

**6.** The colored hair ornament of claim 5, wherein the light-transmissive filament comprises a cladding made of a fluorinated polymer.

**7.** The colored hair ornament of any preceding claim, wherein the light-transmissive filament comprises a layer including at least one of: keratin; and melanin.

**8.** The colored hair ornament of any preceding claim, wherein the one or more light-transmissive filaments are pretreated to modify the number of positive or negative charges in some portions of the light-transmissive filaments or all over the light-transmissive filaments, by chemical or physical means selected from the group consisting of plasma treatment, ozone treatment, dry or wet ion-implantation treatment and combinations thereof.

**9.** The colored hair ornament of any preceding claim, wherein the cationic polymer comprises one or more monomer units comprising one or more amino functional groups per polymer chain, wherein the amino functional group is selected from the group consisting of primary, secondary, tertiary, quaternary amino functional groups and mixtures thereof.

**10.** The colored hair ornament of any preceding claim, wherein the cationic polymer is selected from the group consisting of linear polyethyleneimine, branched polyethyleneimine, polyallylamine hydrochloride, polydiallyldimethylammonium chloride, polyvinylamine, copolymers thereof and mixtures thereof.

**11.** The colored hair ornament of any preceding claim, wherein the anionic polymer comprises at least one monomer unit comprising at least one functional group selected from the group consisting of sulfate, sulfonate, carboxylate,

phosphate, phosphonate groups and mixtures thereof, preferably from the group consisting of sulfate, sulfonate, carboxylate groups and mixtures thereof.

**12.** The colored hair ornament of any preceding claim, wherein the anionic polymer is selected from the group consisting of polystyrene sulfonate salts, λ-carrageenan salts, dextran sulfate salts, polyacrylic acid salts, poly(methacrylic acid) salts, alginic acid salts, carboxymethylcellulose salts, polystyrene sulfonate/polystyrene copolymer salts, polystyrene sulfonate/maleic acid copolymers salt, carboxydextrane salts copolymers thereof and mixtures thereof.

**13.** The colored hair ornament of any preceding claim, wherein:

- the first composition comprises a total concentration of cationic polymers ranging from 0.1 g/L to 100 g/L, preferably from 0.5 g/L to 100 g/L, more preferably from 2g/L to 50 g/L, even more preferably from 5 g/L to 10 g/L and/or
- the second compositions comprise a total concentration of anionic polymers ranging from 0.1 g/L to 100 g/L, preferably from 0.5 g/L to 100 g/L, more preferably from 2g/L to 50 g/L, even more preferably from 5 g/L to 10 g/L.

**14.** A method of customizing the colored hair ornament (100) of claims 1 to 13, comprising at least one or any combination of two or more of:

mechanically altering the surface of one or more light-transmissive filaments of the plurality of light-transmissive filaments;
cutting one or more light-transmissive filaments of the plurality of light-transmissive filaments;
applying a first composition and a second composition, in that order, optionally repeatedly, to the surface of one or more light-transmissive filaments of the plurality of light-transmissive filaments at a respective first and second portion of the one or more light-transmissive filaments, wherein the first and the second portions of the one or more light-transmissive filaments have one or more common areas, wherein the first coating is underneath the second coating;
removing the excess of respectively the first composition and/or the second composition from the one or more light-transmissive filaments of the plurality of light-transmissive filaments;
applying energy to one or more light-transmissive filaments of the plurality of light-transmissive filaments in the form of heat, ultrasounds, infrared and/or microwaves; and
wherein said customizing is preferably performed after attaching the hair ornament to the head of the wearer.

**15.** A kit for treating hair comprising:

(a) a hair ornament as defined in claims 1-13; wherein the hair ornament comprises a light source and a plurality of light-transmissive filaments; and
(b) a first composition comprising one or more cationic polymers;
(c) a second composition comprising one or more anionic polymers;
wherein the cationic polymer is a cationic colored polymer;
wherein the anionic polymer is an anionic colored polymer; and
optionally an applicator to coat the first and second compositions to one or more light-transmissive filaments of the plurality of light-transmissive filaments.

## Patentansprüche

**1.** Gefärbter Haarschmuck (100), umfassend:

eine Lichtquelle (110); und
mehrere lichtdurchlässige Fäden (10, 15, 130);
wobei jeder lichtdurchlässige Faden ein proximales Ende (40, 132), ein distales Ende (50, 134) und eine Seitenwand aufweist,
wobei das proximale Ende jedes lichtdurchlässigen Fadens ausgeführt ist, Licht von der Lichtquelle zu empfangen;
wobei ein oder mehrere lichtdurchlässige Fäden der mehreren lichtdurchlässigen Fäden eine erste Beschichtung (70) mit einer ersten Zusammensetzung, die ein oder mehrere kationische Polymere umfasst, auf einem ersten Abschnitt von dem einen oder den mehreren lichtdurchlässigen Fäden umfassen; und

wobei der eine oder die mehreren lichtdurchlässigen Fäden eine zweite Beschichtung (75) mit einer zweiten Zusammensetzung, die ein oder mehrere anionische Polymere umfasst, auf einem zweiten Abschnitt von dem einen oder den mehreren lichtdurchlässigen Fäden umfassen;
wobei die ersten und die zweiten Abschnitte von dem einen oder den mehreren lichtdurchlässigen Fäden einen oder mehrere gemeinsame Bereiche aufweisen;
wobei sich die erste Beschichtung unter der zweiten Beschichtung befindet;
wobei optional der eine oder die mehreren lichtdurchlässigen Fäden mehrere der ersten und zweiten Beschichtungen mit der ersten Zusammensetzung und der zweiten Zusammensetzung in dieser Reihenfolge umfassen, um mehrere Polymerschichten zu erzeugen;
wobei das kationische Polymer ein kationisches gefärbtes Polymer ist; und wobei das anionische Polymer ein anionisches gefärbtes Polymer ist.

2. Gefärbter Haarschmuck nach Anspruch 1, wobei eine reflektierende Beschichtung auf dem distalen Ende jedes lichtdurchlässigen Fadens, der von der Lichtquelle vorsteht, aufgebracht ist.

3. Gefärbter Haarschmuck nach Anspruch 1, wobei das distale Ende, das aus der Lichtquelle und davon weg vorsteht, in einem Winkel geschnitten ist, um die beobachtete Helligkeit des von der Lichtquelle emittierten Lichtes zu maximieren, wobei der Winkel von 15 bis 75 Grad reicht.

4. Gefärbter Haarschmuck nach Anspruch 1, wobei jeder lichtdurchlässige Faden konfiguriert ist, mindestens etwas von dem Licht, das am proximalen Ende empfangen wird, durch die Seitenwand zu emittieren,
der lichtdurchlässige Faden ein erstes Segment einer Längeneinheit umfasst, das sich in einem ersten Abstand von dem proximalen Ende befindet, und das erste Segment konfiguriert ist, einen ersten Anteil des Lichts, das am ersten Segment von dem proximalen Ende eintrifft, durch die Seitenwand zu emittieren;
der lichtdurchlässige Faden ferner ein zweites Segment einer Längeneinheit umfasst, das sich in einem zweiten Abstand von dem proximalen Ende befindet, und das zweite Segment konfiguriert ist, einen zweiten Anteil des Lichts, das am zweiten Segment von dem proximalen Ende eintrifft, durch die Seitenwand zu emittieren;
wobei der erste Abstand bevorzugt größer ist als der zweite Abstand; und
wobei eine optische Eigenschaft des lichtdurchlässigen Fadens über eine Länge des Fadens derart variiert, dass der erste Anteil größer ist als der zweite Anteil.

5. Gefärbter Haarschmuck nach einem der vorstehenden Ansprüche, wobei der lichtdurchlässige Faden einen Kern und einen Mantel umfasst, wobei der Kern bevorzugt aus PMMA hergestellt ist.

6. Gefärbter Haarschmuck nach Anspruch 5, wobei der lichtdurchlässige Faden einen Mantel umfasst, der aus einem fluorierten Polymer hergestellt ist.

7. Gefärbter Haarschmuck nach einem der vorstehenden Ansprüche, wobei der lichtdurchlässige Faden eine Schicht umfasst, die mindestens eines umfasst von: Keratin; und Melanin.

8. Gefärbter Haarschmuck nach einem der vorstehenden Ansprüche, wobei der eine oder die mehreren lichtdurchlässigen Fäden vorbehandelt sind, um die Anzahl an positiven oder negativen Ladungen in einigen Abschnitten der lichtdurchlässigen Fäden oder den ganzen lichtdurchlässigen Fäden durch chemische oder physische Mittel zu modifizieren, die ausgewählt sind aus der Gruppe bestehend aus Plasmabehandlung, Ozonbehandlung, Trocken- oder Nassionenimplantationsbehandlung und Kombinationen davon.

9. Gefärbter Haarschmuck nach einem der vorstehenden Ansprüche, wobei das kationische Polymer eine oder mehrere Monomereinheiten umfasst, die eine oder mehrere Aminofunktionsgruppen pro Polymerkette umfassen, wobei die Aminofunktionsgruppe ausgewählt ist aus der Gruppe bestehend aus primären, sekundären, tertiären, quaternären Aminofunktionsgruppen und Mischungen davon.

10. Gefärbter Haarschmuck nach einem der vorstehenden Ansprüche, wobei das kationische Polymer ausgewählt ist aus der Gruppe bestehend aus linearem Polyethylenimin, verzweigtem Polyethylenimin, Polyallylaminhydrochlorid, Polydiallyldimethylammoniumchlorid, Polyvinylamin, Copolymeren davon und Mischungen davon.

11. Gefärbter Haarschmuck nach einem der vorstehenden Ansprüche, wobei das anionische Polymer mindestens eine Monomereinheit umfasst, die mindestens eine Funktionsgruppe umfasst, die ausgewählt ist aus der Gruppe bestehend aus Sulfat, Sulfonat, Carboxylat, Phosphat, Phosphonatgruppen und Mischungen davon, bevorzugt aus der

Gruppe bestehend aus Sulfat, Sulfonat, Carboxylatgruppen und Mischungen davon.

**12.** Gefärbter Haarschmuck nach einem der vorstehenden Ansprüche, wobei das anionische Polymer ausgewählt ist aus der Gruppe bestehend aus Polystyrolsulfonatsalzen, λ-Carrageensalzen, Dextransulfatsalzen, Polyacrylsäuresalzen, Poly(methacrylsäure)-Salzen, Alginsäuresalzen, Carboxymethylcellulosesalzen, Polystyrolsulfonat/Polystyrolcopolymer-Salzen, Polystyrolsulfonat/Maleinsäurecopolymeren-Salz, Carboxydextransalzen-Copolymeren davon und Mischungen davon.

**13.** Gefärbter Haarschmuck nach einem der vorstehenden Ansprüche, wobei:

- die erste Zusammensetzung eine Gesamtkonzentration von kationischen Polymeren im Bereich von 0,1 g/L bis 100 g/L, bevorzugt von 0,5 g/L bis 100 g/L, mehr bevorzugt von 2g/L bis 50 g/L, noch mehr bevorzugt von 5 g/L bis 10 g/L umfasst und/oder
- die zweiten Zusammensetzungen eine Gesamtkonzentration von anionischen Polymeren im Bereich von 0,1 g/L bis 100 g/L, bevorzugt von 0,5 g/L bis 100 g/L, mehr bevorzugt von 2g/L bis 50 g/L, noch mehr bevorzugt von 5 g/L bis 10 g/L umfassen.

**14.** Verfahren zum Anpassen des gefärbten Haarschmucks (100) nach den Ansprüchen 1 bis 13, das mindestens eines oder jede Kombination aus zwei oder mehr umfasst von:

mechanischem Abändern der Fläche von einem oder mehreren lichtdurchlässigen Fäden der mehreren lichtdurchlässigen Fäden;
Schneiden von einem oder mehreren lichtdurchlässigen Fäden der mehreren lichtdurchlässigen Fäden;
Aufbringen einer ersten Zusammensetzung und einer zweiten Zusammensetzung, in dieser Reihenfolge, optional wiederholt, auf die Fläche von einem oder mehreren lichtdurchlässigen Fäden der mehreren lichtdurchlässigen Fäden an einem entsprechenden ersten und zweiten Abschnitt von dem einen oder den mehreren lichtdurchlässigen Fäden, wobei die ersten und die zweiten Abschnitte von dem einen oder den mehreren lichtdurchlässigen Fäden einen oder mehrere gemeinsame Bereiche aufweisen, wobei sich die erste Beschichtung unter der zweiten Beschichtung befindet;
Entfernen des Überschusses von entsprechend der ersten Zusammensetzung und/oder der zweiten Zusammensetzung von dem einen oder den mehreren lichtdurchlässigen Fäden der mehreren lichtdurchlässigen Fäden;
Anwenden von Energie auf einen oder mehrere lichtdurchlässige Fäden der mehreren lichtdurchlässigen Fäden in der Form von Wärme, Ultrawellen, Infrarot- und/oder Mikrowellen; und
wobei das Anpassen bevorzugt nach dem Befestigen des Haarschmucks am Kopf des Trägers ausgeführt wird.

**15.** Kit zum Behandeln von Haar, umfassend:

(a) einen Haarschmuck nach den Ansprüchen 1 bis 13; wobei der Haarschmuck eine Lichtquelle und mehrere lichtdurchlässige Fäden umfasst; und
(b) eine erste Zusammensetzung, die ein oder mehrere kationische Polymere umfasst;
(c) eine zweite Zusammensetzung, die ein oder mehrere anionische Polymere umfasst; wobei das kationische Polymer ein kationisches gefärbtes Polymer ist;
wobei das anionische Polymer ein anionisches gefärbtes Polymer ist; und
optional einen Applikator, um die ersten und zweiten Zusammensetzungen auf einen oder mehrere lichtdurchlässigen Fäden der mehreren lichtdurchlässigen Fäden zu beschichten.

## Revendications

**1.** Ornement coloré pour cheveux (100) comprenant :

une source de lumière (110) ; et
une pluralité de filaments de transmission de lumière (10, 15, 130) ;
dans lequel chaque filament de transmission de lumière comporte une extrémité proximale (40, 132), une extrémité distale (50, 134) et une paroi latérale,
dans lequel l’extrémité proximale de chaque filament de transmission de lumière est conçue pour recevoir de la lumière en provenance de la source de lumière ;

dans lequel un ou plusieurs filaments de transmission de lumière de la pluralité de filaments de transmission de lumière comprennent un premier revêtement (70) ayant une composition comprenant un ou plusieurs polymères cationiques à une première partie du ou des filaments de transmission de lumière ; et
dans lequel le ou les filaments de transmission de lumière comprennent un second revêtement (75) ayant une seconde composition comprenant un ou plusieurs polymères anioniques à une seconde partie du ou des filaments de transmission de lumière ;
dans lequel les première et seconde parties du ou des filaments de transmission de lumière ont une ou plusieurs zones communes ;
dans lequel le premier revêtement se trouve en dessous du second revêtement ;
facultativement, dans lequel le ou les filaments de transmission de lumière comprennent une pluralité de premier et second revêtements ayant la première composition et la seconde composition dans cet ordre pour créer une pluralité de couches polymères ;
dans lequel le polymère cationique est un polymère coloré cationique ; et
dans lequel le polymère anionique est un polymère coloré anionique.

2. Ornement coloré pour cheveux selon la revendication 1, dans lequel un revêtement réfléchissant est appliqué à l'extrémité distale de chaque filament de transmission de lumière faisant saillie depuis la source de lumière.

3. Ornement coloré pour cheveux selon la revendication 1, dans lequel l'extrémité distale faisant saillie en dehors et à distance de la source de lumière est découpée pour maximiser la luminosité observée d'une lumière émise depuis la source de lumière, dans lequel l'angle varie entre 15 et 75 degrés.

4. Ornement coloré pour cheveux selon la revendication 1, dans lequel chaque filament de transmission de lumière est configuré pour émettre à travers la paroi latérale au moins une partie de la lumière reçue au niveau de l'extrémité proximale,
le filament de transmission de lumière comprenant un premier segment d'une longueur unitaire, situé à une première distance de l'extrémité proximale, le premier segment étant configuré pour émettre à travers la paroi latérale une première proportion de la lumière arrivant au niveau du premier segment en provenance de l'extrémité proximale ;
le filament de transmission de lumière comprenant en outre un second segment d'une longueur unitaire, situé à une seconde distance de l'extrémité proximale, le second segment étant configuré pour émettre à travers la paroi latérale une seconde proportion de la lumière arrivant au niveau du second segment en provenance de l'extrémité proximale ; dans lequel la distance est, de préférence, plus importante que la seconde distance ; et
dans lequel une propriété optique du filament de transmission de lumière varie sur une longueur du filament de telle sorte que la première proportion soit plus importante que la seconde proportion.

5. Ornement coloré pour cheveux selon l'une quelconque des revendications précédentes, dans lequel le filament de transmission de lumière comprend une âme et une gaine, de préférence dans lequel l'âme est réalisée en PMMA.

6. Ornement coloré pour cheveux selon la revendication 5, dans lequel le filament de transmission de lumière comprend une gaine réalisée en polymère fluoré.

7. Ornement coloré pour cheveux selon l'une quelconque des revendications précédentes, dans lequel le filament de transmission de lumière comprend une couche comprenant au moins : de la kératine ; et/ou de la mélanine.

8. Ornement coloré pour cheveux selon l'une quelconque des revendications précédentes, dans lequel le ou les filaments de transmission de lumière sont prétraités pour modifier le nombre de charges positives ou négatives dans certaines parties des filaments de transmission de lumière ou partout sur les filaments de transmission de lumière, par des moyens chimiques ou physiques sélectionnés dans le groupe constitué par un traitement plasma, un traitement à l'ozone, un traitement à implantation ionique par voie sèche ou humide et des combinaisons de ces derniers.

9. Ornement coloré pour cheveux selon l'une quelconque des revendications précédentes, dans lequel le polymère cationique comprend une ou plusieurs unités monomères comprenant un ou plusieurs groupes fonctionnels amino par chaîne polymère, dans lequel le groupe fonctionnel amino est sélectionné dans le groupe constitué par des groupes fonctionnels amino primaire, secondaire, tertiaire et quaternaire et des mélanges de ces derniers.

10. Ornement coloré pour cheveux selon l'une quelconque des revendications précédentes, dans lequel le polymère cationique est sélectionné dans le groupe constitué par le polyéthylène linéaire, le polyéthylène ramifié, l'hydrochlorure de polyallylamine, le chlorure de polydiallyldiméthylammonium, la polyvinylamine, des copolymères de ces derniers et des mélanges de ces derniers.

**11.** Ornement coloré pour cheveux selon l'une quelconque des revendications précédentes, dans lequel le polymère anionique comprend au moins une unité monomère comprenant au moins un groupe fonctionnel sélectionné dans le groupe constitué par le sulfate, le sulfonate, le carboxylate, le phosphate, les groupes phosphates et des mélanges de ces derniers, de préférence dans le groupe constitué par le sulfate, le sulfonate, les groupes carboxylates et des mélanges de ces derniers.

**12.** Ornement coloré pour cheveux selon l'une quelconque des revendications précédentes, dans lequel le polymère anionique est sélectionné dans le groupe constitué par les sels de sulfonate de polystyrène, les sels de lambda-carraghénane, les sels de sulfate de dextrane, les sels d'acide polyacrylique, les sels de poly(méthacrylique), les sels d'acide alginique, les sels de carboxyméthylcellulose, les sels de copolymère de sulfonate de polystyrène/polystyrène, le sel de copolymères de sulfonate de polystyrène/d'acide maléique, des copolymères de sels de carboxydextrane de ces derniers et des mélanges de ces derniers.

**13.** Ornement coloré pour cheveux selon l'une quelconque des revendications précédentes, dans lequel :

- la première composition comprend une concentration totale de polymères cationiques variant entre 0,1 g/l et 100 g/l, de préférence entre 0,5 g/l et 100 g/l, plus préférentiellement entre 2 g/l et 50 g/l, plus préférentiellement encore entre 5 g/l et 10 g/l et/ou
- la seconde composition comprend une concentration totale de polymères anioniques variant entre 0,1 g/l et 100 g/l, de préférence entre 0,5 g/l et 100 g/l, plus préférentiellement entre 2 g/l et 50 g/l, plus préférentiellement encore entre 5 g/l et 10 g/l.

**14.** Procédé de personnalisation de l'ornement coloré pour cheveux (100) selon les revendications 1 à 13, comprenant au moins :
une étape ou une combinaison quelconque d'au moins deux étapes consistant :

à modifier mécaniquement la surface d'un ou de plusieurs filaments de transmission de lumière de la pluralité de filaments de transmission de lumière ;
à découper un ou plusieurs filaments de transmission de lumière de la pluralité de filaments de transmission de lumière ;
à appliquer une première composition et une seconde composition, dans cet ordre, facultativement à plusieurs reprises, à la surface d'un ou de plusieurs filaments de transmission de lumière de la pluralité de filaments de transmission de lumière au niveau d'une première et d'une seconde partie respective du ou des filaments de transmission de lumière, dans lequel les première et seconde parties du ou des filaments de transmission de lumière ont une ou plusieurs zones communes, dans lequel le premier revêtement se trouve en dessous du second revêtement ;
à enlever le surplus respectivement de la première composition et/ou de la seconde composition du ou des filaments de transmission de lumière de la pluralité de filaments de transmission de lumière ;
à appliquer de l'énergie à un ou plusieurs filaments de transmission de lumière de la pluralité de filaments de transmission de lumière sous forme de chaleur, d'ultrasons, d'infrarouge et/ou de micro-ondes ; et
dans lequel ladite personnalisation est, de préférence, réalisée après la fixation de l'ornement pour cheveux à la tête de la personne qui le porte.

**15.** Kit pour traiter des cheveux comprenant :

(a)un ornement pour cheveux tel que défini dans les revendications 1 à 13 ; dans lequel l'ornement pour cheveux comprend une source de lumière et une pluralité de filaments de transmission de lumière ; et
(b)une première composition comprenant un ou plusieurs polymères cationiques ;
(c)une seconde composition comprenant un ou plusieurs polymères anioniques ;
dans lequel le polymère cationique est un polymère cationique coloré ;
dans lequel le polymère anionique est un polymère anionique coloré ; et
facultativement, un applicateur pour revêtir les première et seconde compositions sur un ou plusieurs filaments de transmission de lumière de la pluralité de filaments de transmission de lumière.

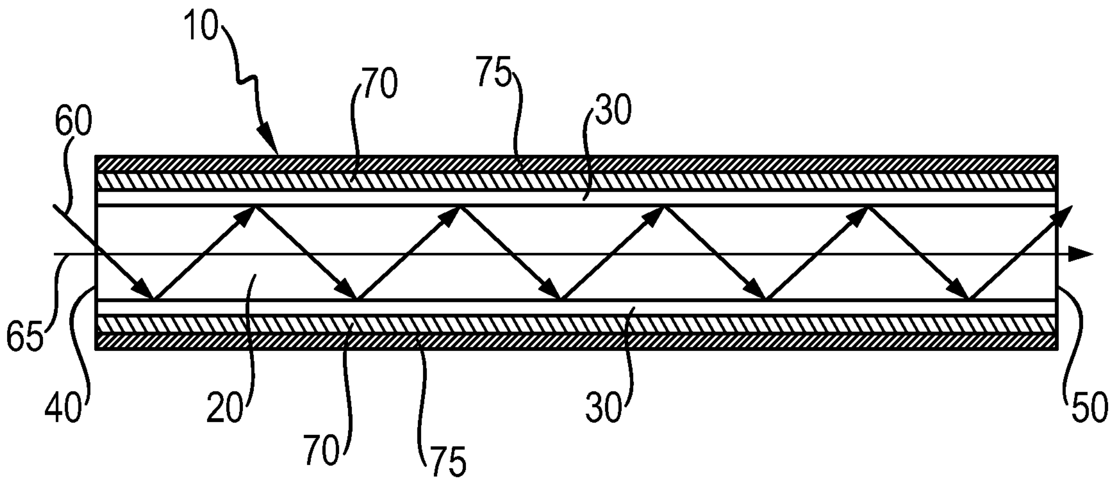


**Fig. 1**

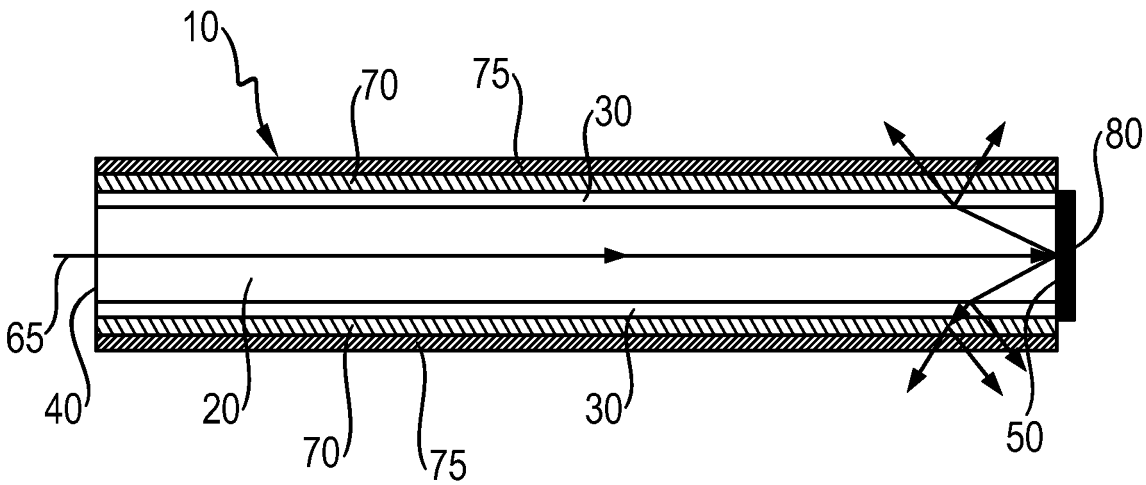


**Fig. 2**

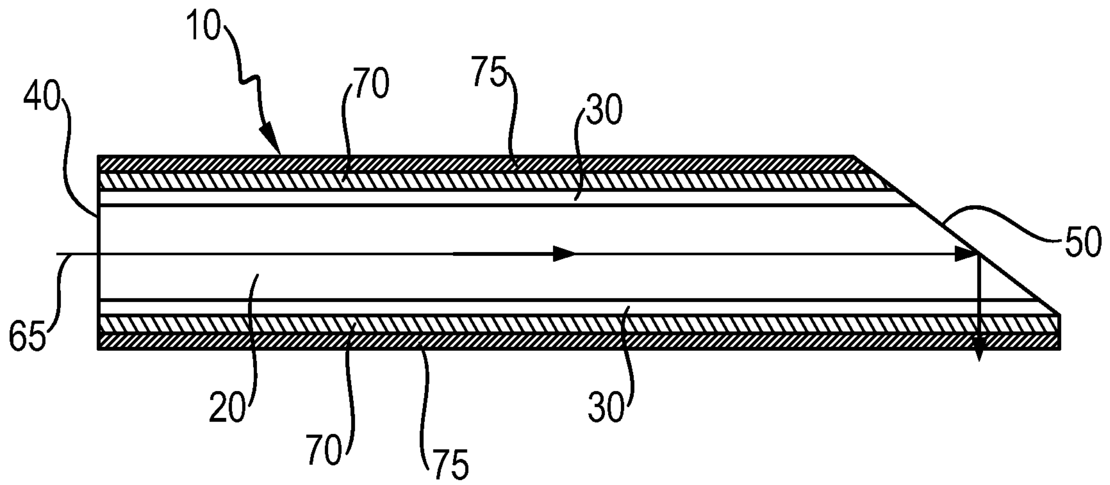


Fig. 3

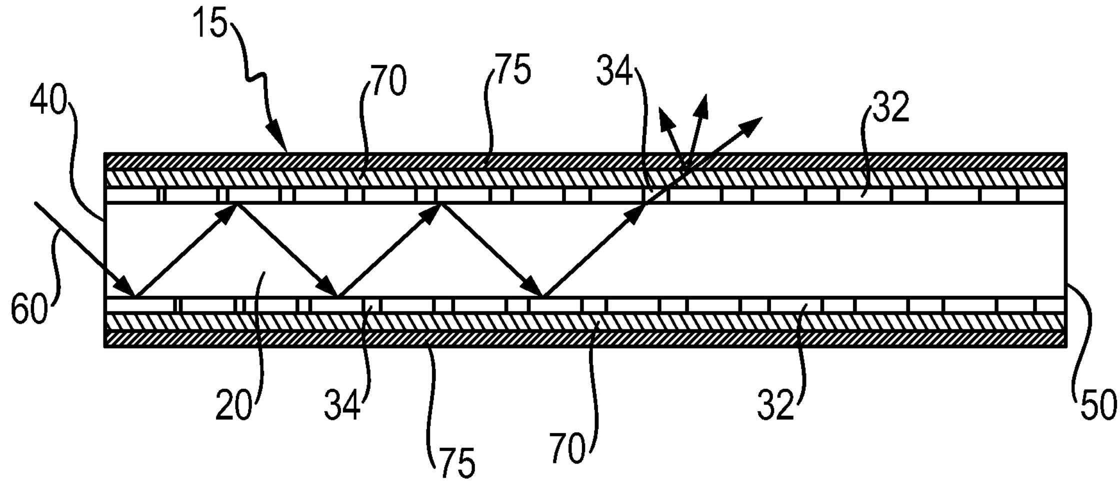


Fig. 4

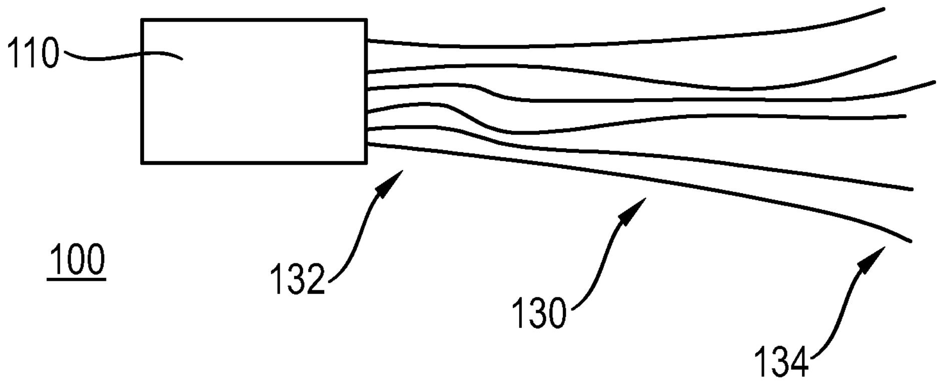


Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3675005 A
- US 2003156429 A1


### Non-patent literature cited in the description


- International Cosmetics Ingredient Dictionary and Handbook. The Cosmetics, Toiletry, and Fragrance Association
- *CHEMICAL ABSTRACTS,* 71550-12-4
- *CHEMICAL ABSTRACTS,* 36877-69-7
- *CHEMICAL ABSTRACTS,* 9002-98-6
- *CHEMICAL ABSTRACTS,* 72828-03-6
- *CHEMICAL ABSTRACTS,* 2580-78-1
- *CHEMICAL ABSTRACTS,* 61969-03-7
- *CHEMICAL ABSTRACTS,* 7398-69-8
- *CHEMICAL ABSTRACTS,* 2695-37-6
- *CHEMICAL ABSTRACTS,* 25087-26-7
- *CHEMICAL ABSTRACTS,* 25704-18-1
- *CHEMICAL ABSTRACTS,* 9064-57-7
- *CHEMICAL ABSTRACTS,* 9011-18-1
- *CHEMICAL ABSTRACTS,* 9005-38-3